# EUROPÄISCHE PATENTSCHRIFT

(11) **EP 1 670 663 B1**
(45) Veröffentlichungstag und Bekanntmachung des Hinweises auf die Patenterteilung: **26.12.2007**
(21) Anmeldenummer: 04766669.8
(22) Anmeldetag: 01.09.2004
(51) Int. Cl.: B60R 16/02, H02J 7/14

(54) **SCHALTVORRICHTUNG ZUM BIDIREKTIONALEN LADUNGSAUSGLEICH ZWISCHEN ENERGIESPEICHERN UND VERFAHREN**
SWITCHING DEVICE FOR BI-DIRECTIONALLY EQUALIZING CHARGE BETWEEN ENERGY ACCUMULATORS, AND CORRESPONDING METHODS
DISPOSITIF DE COMMUTATION POUR LA COMPENSATION DE CHARGE BIDIRECTIONNELLE ENTRE DES ACCUMULATEURS D'ENERGIE ET PROCEDE CORRESPONDANT

(30) Priorität: 06.10.2003 DE 10346325
(43) Veröffentlichungstag der Anmeldung: 21.06.2006
(73) Patentinhaber: Siemens VDO Automotive AG, 93055 Regensburg (DE)
(72) Erfinder: BOLZ, Stephan, 93102 Pfatter (DE); KNORR, Rainer, 93055 Regensburg (DE); LUGERT, Günter, 93055 Regensburg (DE)
(86) Internationale Anmeldenummer: PCT/EP2004/051989
(87) Internationale Veröffentlichungsnummer: WO 2005/035317

(56) Entgegenhaltungen:
- EP-A- 1 424 494
- DE-A- 10 042 414
- DE-A- 10 042 524
- GB-A- 2 373 648

## Beschreibung

Die Erfindung betrifft eine Schaltvorrichtung zum bidirektionalen Ladungsausgleich zwischen Energiespeichern, insbesondere zwischen kapazitiven Energiespeichern in einem Kraftfahrzeug-Bordnetzes mit integrierten Starter Generator. Die Erfindung betrifft ferner ein Kraftfahrzeugbordnetzsystem mit einer solchen Schaltvorrichtung sowie ein Verfahren zum Betreiben der Schaltvorrichtung.

Bisher verwenden Kraftfahrzeuge ein Bordnetzsystem mit einer Bordnetzspannung von 14 V, wodurch eine Ladespannung für den Akkumulator von 12 V realisierbar ist. Die Abgabeleistung ist dabei technisch sinnvoll auf maximal 2 KW begrenzt, da sonst zu große Bordnetzströme fließen würden. Bei einer 14 V Bordnetzspannung kann der Startergenerator zwar die Brennkraftmaschine starten und die elektrischen Lasten während der Fahrt versorgen, für weitere Funktionen wie Boost (Beschleunigen) oder Rekuperation (regeneratives Bremsen) ist jedoch eine Leistung von mehr als 2 KW erforderlich. Diese Leistung kann nur mit einer höheren Bordnetzspannung und damit mit einer höheren elektrischen Leistung im Kraftfahrzeug erreicht werden. Daher sollen künftige Bordnetzsysteme mit einer höheren Bordnetzspannung von zum Beispiel 42 V (das entspricht einer Ladespannung des Akkumulators von 36 V) ausgestattet sein, so dass bei gleichem Strom etwa die dreifache Leistung verfügbar ist.

Als primäre Energiequelle wurden verschiedene Formen eines direkt an die Kurbelwelle angebauten Generators entwickelt, der - in Umkehrung seines Wirkungsprinzips - auch als Elektromotor und damit als Starter zur Unterstützung des Verbrennungsmotors verwendbar ist. Dieser Generator wird als integrierter Startergenerator (ISG) bezeichnet. Der ISG erlaubt im generatorischen Betrieb die Erzeugung elektrischer Leistung und im motorischen Betrieb die Erzeugung mechanischer Antriebsleistung. Neben der gegenüber bekannten 2 KW-Lichtmaschinen erheblich gesteigerten Leistung (etwa 6 KW bei ISG) und ergänzend zu seiner ursprünglichen Funktion wie Motorstart und Bordnetzversorgung weist ein ISG noch die folgenden zusätzlichen Funktionen:
- Boost (Beschleunigen): Drehmomentunterstützung der Brennkraftmaschine während der Beschleunigungsphase des Kraftfahrzeuges. Der ISG verfügt über ein maximales Drehmoment von etwa 200 Nm, was etwa dem Drehmoment einer 2 l Brennkraftmaschine entspricht. Während des Boost-Vorganges werden zur Bereitstellung dieses Drehmomentes für ca. 10 - 15 Sekunden Ströme bis 270 A benötigt.
- Rekuperation (regeneratives Bremsen): Der ISG schöpft beim Bremsen des Kraftfahrzeuges Bewegungsenergie durch Stromerzeugung ab. Dabei werden für bis zu 30 Sekunden Ströme bis zu 270 A erzeugt, die in Form von elektrischer Energie wieder gespeichert werden.
- Stop and Go (Motorstillstand bei Fahrzeugstopp, schneller Start des Verbrennungsmotors beim Wiederanfahren).

Modellrechnungen und Messungen an Versuchsfahrzeugen haben bei Verwendung eines ISG eine Kraftfahrstoffersparnis von über 20% im Stadtverkehr beziehungsweise einem entsprechenden Fahrzyklus bei Ausnutzung der obigen neuen Funktionen ergeben. Soll der ISG im Wesentlichen für die Kraftfahrstoffeinsparungsfunktion verwendet werden, muss das Kraftfahrzeugbordnetzsystem in der Lage sein, kurzfristig eine erhebliche Leistung bereitzustellen oder wieder zu speichern. Bei Spitzenströmen von 800 A handelt es sich hier um Leistungen im Bereich von 10 KW. Herkömmliche 14 V Starterbatterien (Akkumulatoren), wie auch zukünftige 42 V Starterbatterien sind allerdings nicht in der Lage, solche hohen Spitzenströme bereitzustellen beziehungsweise wieder aufzunehmen. Bei Verwendung von anderen Akkumulatortypen, zum Beispiel Nickel-Kadmium-Batterien, Nickel-Metallhydrid-Batterien oder Lithium-Ionen-Batterien, könnten unter Umständen solch hohe Spitzenströme aufgenommen werden. Allerdings erfüllen solche Batterietypen andere Anforderungen an das Bordnetzsystem, wie zum Beispiel eine hohe Zyklenfestigkeit, nicht oder nur mangelhaft. Insbesondere müssten heutige Batterietypen dazu ausgelegt sein, 300.000 bis 500.000 Lade- und Entladezyklen, wie sie für die Boost- und Rekuperation-Funktion des ISG typisch sind, zu beherrschen. Mit heute bekannten Batterietypen (Akkumulatoren) für Kraftfahrzeuganwendungen lassen sich solch hohe Zyklenwechsel nicht beherrschen.

Nur wenige Energiespeicher sind überhaupt in der Lage, die geforderten hohen Zyklenzahlen beziehungsweise den hohen Energiedurchsatz - bei 200.000 Boost-Vorgängen werden insgesamt ca. 12,6 MWh an Energie beziehungsweise ca. 180.000 Ah benötigt - bereitzustellen. Lediglich Doppelschichtkondensatoren (DLC = Double Layer Capacitor) haben sich aus einer Reihe von Gründen als geeignete Energiespeicher für die oben beschriebenen Kraftfahrstoffeinsparfunktionen herausgestellt. Doppelschichtkondensatoren sind in der Lage, die beim Boosten und Rekuperieren umgesetzten hohen Energien zu speichern und wieder abzugeben. Auch sind die dabei auftretenden Ströme für die Funktion der Doppelschichtkondensatoren unproblematisch. Wegen ihres sehr hohen Wirkungsgrades ergibt sich auch eine sehr geringe Eigenerwärmung und damit eine hohe Lebenserwartung. Die begrenzte Energiespeicherfähigkeit eines Doppelschichtkondensators macht allerdings einen zusätzlichen Akkumulator, beispielsweise einen einfachen Blei-Säure-Akkumulator erforderlich. Dieser Akkumulator wird jedoch durch die häufigen Zyklenwechsel nicht zyklisch belastet, so dass eine relativ hohe Lebensdauer gemäß heutigem Standard zu erwarten ist.

Ein Nachteil beim Einsatz von Doppelschichtkondensatoren als Energiespeicher besteht allerdings darin, dass ein Energieaustausch am Kondensator zwangsläufig auch mit einer Spannungsveränderung verbunden ist. Um 75% der Ladung zu bewegen, muss die Kondensatorspannung um 50% variiert werden. Für ein 42 V Bordnetz würde dies zum Beispiel eine Spannungsschwankung von 21 V bis 42 V im voll aufgeladenen Zustand bedeuten. Für ein Kraftfahrzeugbordnetzsystem ist eine solche Spannungsschwankung allerdings nicht akzeptabel, da hier eine möglichst stabile Spannung erforderlich ist.

In der WO 02/066192 A1 ist ein Kraftfahrzeugbordnetz beschrieben, bei dem der ISG mit dem 42 V Bordnetz und dem Doppelschichtkondensator mittels mehrerer Leistungsschalter dynamisch verbunden ist. Im normalen Fahrbetrieb verbinden diese als Leistungsschalter ausgebildeten Verbindungsschalter den ISG und das 42 V Bordnetz miteinander. Lediglich während der Dauer der Kraftstoffeinsparfunktionen, die typischerweise bis maximal 10 Sekunden dauern kann, sind der ISG und der Doppelschichtkondensator miteinander verbunden. Auf diese Weise kann gewährleistet werden, dass das 42 V Bordnetz und der Doppelschichtkondensator stets physikalisch getrennt, so dass unterschiedliche Spannungspotenziale hier auch keine Rolle spielen.

Bei der Realisierung der Verbindungsschalter zwischen ISG und 42 V Bordnetz beziehungsweise Doppelschichtkondensator liegt das Hauptaugenmerk vor allem auf dem kontrollierten Einschalten der Verbindungsschalter, da mit einem Glättungskondensator am ISG und der 42 V Batterie beziehungsweise mit dem Glättungskondensator und dem Doppelschichtkondensator jeweils zwei sehr niederohmige Energiequellen miteinander verbunden werden. Um eine möglichst hohe Kraftfahrstoffeinsparfunktion zu realisieren, werden die Verbindungsschalter derart angesteuert, dass ein erforderlicher Ladungsausgleich möglichst sehr gut kontrollierbar erfolgen kann.

Das in der WO 02/066293 A1 beschriebene Kraftfahrzeugbordnetz ist für eine optimale Kraftstoffeinsparfunktion ausgelegt. Bei vielen Anwendungen muss das Kraftfahrzeugbordnetz neben seiner Kraftstoffeinsparfunktion - insbesondere der elektrische Beschleunigungsunterstützung - zusätzlich auch anderen Anforderungen gerecht werden. So spielt in vielen Anwendungen, insbesondere bei höherpreisigen Kraftfahrzeugen, zusätzlich auch der Fahrkomfort eine besonders große Rolle. Es besteht somit der Bedarf, eine Synthese zwischen den beiden Anforderungen eines möglichst hohen Fahrkomforts als auch einer möglichst hohen Kraftstoffeinsparung zu finden.

Am besten gelingt dies dadurch, dass die beim regenerativen Bremsen rückgewonnene und im Doppelschichtkondensator gespeicherte Energie bedarfsweise dem 42 V Bordnetz direkt zugeführt wird. Allerdings ist dann der Doppelschichtkondensator nicht mehr von dem 42 V Bordnetz getrennt, sondern wärewenngleich auch nur kurze Zeit - direkt mit diesem verbunden. Dies sollte aber vermieden werden. Um einerseits eine physikalische Trennung zwischen Doppelschichtkondensator und 42 V Bordnetz bereitzustellen und andererseits der Anforderung gerecht zu werden, bei Bedarf die gespeicherte Energie des Doppelschichtkondensators in das 42 V Bordnetz zurück zu speisen, ist eine Erweiterung der Funktionalität zumindest eines der Verbindungsschalter zwischen ISG und 42 V Bordnetz beziehungsweise Doppelschichtkondensator erforderlich.

Der vorliegenden Erfindung liegt daher die Aufgabe zugrunde, eine möglichst einfache Umschaltvorrichtung anzugeben, die eine solche Einspeisung der vom Doppelschichtkondensator rückgewonnenen Energie in das Bordnetz ermöglicht und die dennoch eine physikalische Trennung zwischen Doppelschichtkondensator und Bordnetz ermöglicht.

Erfindungsgemäß wird diese Aufgabe durch eine Schaltvorrichtung mit den Merkmalen des Patentanspruchs 1 gelöst. Ferner ist ein Kraftfahrzeug-Bordnetz mit den mit den Merkmalen des Patentanspruchs 20, ein Verfahren mit den Merkmalen des Patentanspruchs 26 vorgesehen.

Die der vorliegenden Erfindung zugrunde liegende Idee besteht darin, als Verbindungsschalter zumindest ein Transfer-Gate zu verwenden, welches eine erweiterte Funktionalität aufweist. Ein solches Transfer-Gate ist zwischen dem Kraftfahrzeugbordnetz und dem Doppelschichtkondensator und auch zwischen einem dieser Elemente und dem Starter-Generator angeordnet. Das Transfer-Gate bietet eine besonders effiziente Lösung zur Trennung des Kraftfahrzeugbordnetzes und des Doppelschichtkondensators und zum Verbinden dieser Elemente mit dem Starter-Generator. Aufgrund der hohen Ströme besteht das Transfer-Gate aus einer Parallelschaltung aus jeweils zwei in Reihe geschalteten steuerbaren Leistungsschaltern. Deren Source-Anschlüsse sind jeweils miteinander verbunden. Wesentlich ist hier, dass zumindest ein Zweig der parallel geschalteten Transistoren, also eine der Reihenschaltungen, als bidirektional betreibbarer Schaltregler ausgebildet ist. Vorteilhafterweise ist dieser Schaltregler als Abwärtsregler ausgebildet. Die erweiterte Funktionalität des Transfer-Gates ergibt sich somit durch das Bereitstellen eines zusätzlichen Schaltreglers, dessen Lastpfad parallel zu den Lastpfaden der Transfer-Gates angeordnet ist, sowie einer Ansteuerschaltung zur Ansteuerung des Transfer-Gates und des Schaltreglers.

Die Leistungsschalter der erfindungsgemäßen Schaltvorrichtung sind vorteilhafterweise als Leistungs-MOSFET ausgebildet. Denkbar wären hier allerdings auch JFETs, Thyristoren, IGBTs oder dergleichen.

Das erfindungsgemäße Transfer-Gate erlaubt nun einen Ladungsausgleich zwischen dem Zwischenkreiskondensator und dem Doppelschichtkondensator bzw. zwischen dem Zwischenkreiskondensator und der Batterie, der vorteilhafterweise mit einem optimalen Wirkungsgrad ausgestattet ist. Mittels des erfindungsgemäßen Transfer-Gates lassen sich so Wirkungsgrade von typischerweise 85% realisieren. Mit bisherigen Anwendungen, zum Beispiel herkömmlichen Transfer-Gates ohne Schaltregler oder Leistungsschalter, lassen sich hingegen lediglich Wirkungsgrade bis zu 50% realisiert, da etwa 50% der Ladungsdifferenz in den Verbindungsschaltern beziehungsweise im Leistungswiderstand in Wärme umgewandelt wurde.

Mittels der erfindungsgemäßen Schaltvorrichtung mit erweiterten Transfer-Gates ist zudem eine Entladung des Doppelschichtkondensators bis auf das Spannungsniveau des 42 V Bordnetzes möglich. Dies ist auch wünschenswert, um bei einer Brennkraftmaschine im Leerlauf die bei einem regenerativen Bremsen rückgewonnene Energie wieder in das Bordnetzsystem einzuspeisen zu können.

Vorteilhafterweise ist auch ein Nachladen des Doppelschichtkondensators bis auf das Spannungsniveau des Bordnetzsystems möglich. Dies ist auch wünschenswert, um den beispielsweise nach mehrwöchigem Fahrzeugstillstand entladenen Doppelschichtkondensator wieder nachzuladen und mittels aufgeladenem Doppelschichtkondensator das Fahrzeug zu starten.

Die erfindungsgemäße Lösung ist auch insoweit ökonomisch, als sie einen Ladungsausgleich für Ströme von etwa 30 A bis ca. 100 A zulässt und bei eingeschaltetem Transfer-Gate Schalterströme bis ca. 1.000 A erlaubt. Die Leistungstransistoren des Schaltreglers bzw. des Transfer-Gates tragen dabei einen Teilstrom mit, so dass hier vorteilhafterweise eine Mehrfachnutzung dieser Transistoren realisiert wird.

Vorzugsweise ist der Starter-Generator drehfest mit dem Antriebsstrang verbunden, er kann jedoch auch riemengetrieben sein.

Vorteilhafte Ausgestaltungen und Weiterbildungen der Erfindung ergeben sich aus den weiteren Unteransprüchen sowie der Beschreibung unter Bezugnahme auf die Zeichnungen.

Die Erfindung wird nachfolgend anhand der in den schematischen Figuren der Zeichnung angegebenen Ausführungsbeispiele näher erläutert. Es zeigt dabei:
- Figur 1: ein Prinzipschaltbild eines erfindungsgemäßen Kraftfahrzeugbordnetzsystems, bei dem die Funktion eines Verbindungsschalters durch eine erfindungsgemäße Schaltvorrichtung mit erweitertem Transfer-Gate ersetzt ist;
- Figur 2: anhand eines Schaltbildes ein vereinfachtes Ausführungsbeispiel eines durch einen Schaltregler erweiterten erfindungsgemäßen Transfer-Gates für eine erfindungsgemäße Schaltvorrichtung;
- Figur 3: ein Blockschaltbild einer erfindungsgemäßen Schaltvorrichtung mit einem Transfer-Gate und einem Schaltregler aus Figur 2 sowie einer Ansteuerschaltung zu Ansteuerung des Schaltreglers und weiteren Funktionseinheiten;
- Figur 4: ein detailliertes Schaltbild eines Transfer-Gates einer erfindungsgemäßen Schaltvorrichtung mit Ladungspumpe und Ansteuerschaltung;
- Figur 5: ein detailliertes Schaltbild eines Schaltreglers der erfindungsgemäßen Schaltvorrichtung;
- Figur 6: die Anschlussbelegung eines als Messtransistor ausgebildeten Leistungs-MOSFETs für einen Schaltregler aus Figur 5;
- Figur 7: ein Schaltbild zur Darstellung der Hilfsspannungsquelle zur Versorgung der Gate-Steuerschaltung des Schaltreglers aus Figur 5;
- Figur 8: ein Schaltbild einer Gate-Steuerschaltung zur Steuerung des Schaltreglers aus Figur 5;
- Figur 9: ein Schaltbild der Spannungsmesseinrichtung der erfindungsgemäßen Schaltvorrichtung mit Polaritätserkennung und Absolutwertbildung;
- Figur 10: ein Schaltbild für die Ablaufsteuerschaltung der erfindungsgemäßen Schaltvorrichtung.

In allen Figuren der Zeichnung sind gleiche beziehungsweise funktionsgleiche Elemente und Signale - sofern nichts anderes angegeben ist - mit denselben Bezugszeichen versehen worden.

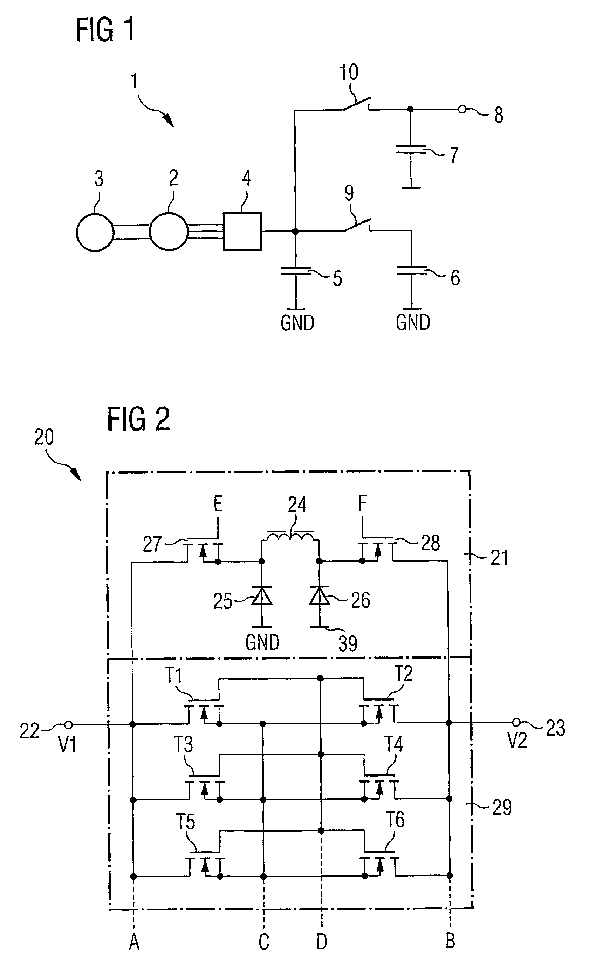

Figur 1 zeigt ein Prinzipschaltbild eines erfindungsgemäßen Kraftfahrzeugbordnetzsystems, bei dem die Funktion eines Verbindungsschalters durch eine erfindungsgemäße Schaltvorrichtung mit erweitertem Transfer-Gate ersetzt ist.

Mit Bezugszeichen 1 ist in Figur 1 das Kraftfahrzeugbordnetzsystem bezeichnet. Das Kraftfahrzeugbordnetzsystem 1 besteht aus einem integrierten Startergenerator 2 - nachfolgend als ISG bezeichnet -, der mechanisch mit einer Brennkraftmaschine 3 gekoppelt ist. Der ISG ist eine Asynchronmaschine die über einen bidirektional betreibbaren AC/DC-Wandler 4 und einen Zwischenkreiskondensator 5 mit einer Energieversorgung verbunden ist. Die Energieversorgung besteht zum einen aus einem Doppelschichtkondensator 6 - nachfolgend als DLC-Kondensator bezeichnet - und zum anderen aus einem Akkumulator 7, an dem eine Spannung von 36/42 V anliegt (Nennspannung 36 V, im voll geladenen Zustand 42 V). Aus diesem Akkumulator 7 können Verbraucher über einen Ausgang 8 direkt gespeist werden. Am Ausgang 8 liegt die besagte Spannung von 36/42 V an. Der DLC-Kondensator 6 ist über einen ersten Schalter 9 mit dem ISG 2 verbunden, der Akkumulator 7 ist über einen zweiten Schalter 10 mit dem ISG verbunden. Bei geeigneter Ansteuerung dieser steuerbaren Schalter 9, 10 ist eine im DLC-Kondensator 6 gespeicherte Energie in den Akkumulator 7 einspeisbar.

Im normalen Fahrbetrieb wird der ISG 2 von der Brennkraftmaschine 3 angetrieben und arbeitet somit im Generatorbetrieb. Dabei lädt er die Energiespeicher mit Energie auf, was im normalen Fahrbetrieb mit geringer Leistung erfolgen kann. Im Rekuperationsbetrieb erfolgt diese Aufladung mit erhöhter Leistung, die der maximalen Leistungsabgabe des ISG 2 entspricht. Für einen 6-KW ISG 2 bedeutet dies einen maximalen Ladestrom von über 250 A.

Dieser grundsätzlich Aufbau eines solchen Kraftfahrzeug-Bordnetzsystems mit ISG und Doppelschichtkondensator ist bereits in der eingangs erwähnten WO 02/066192 A1 beschriebenen, welches hinsichtlich des allgemeinen Aufbaus und Funktionsweise eines Kraftfahrzeug-Bordnetzsystems, ISGs, Doppelschichtkondensators und der Schalter vollinhaltlich in die vorliegende Patentanmeldung mit einbezogen wird.

Erfindungsgemäß ist nun zumindest einer der gesteuerten Schalter 9, 10 als erfindungsgemäße Schaltvorrichtung mit Transfer-Gate, Schaltregler und erweiterter Funktionalität ausgebildet. Die erfindungsgemäße Schaltvorrichtung hat somit zunächst die Funktion eines gesteuerten Schalters. Darüber hinaus wird - wie nachstehend noch sehr detailliert erläutert wird - mittels dieser Schaltvorrichtung der Schaltvorgang insbesondere hinsichtlich der über dem Schalter abfallenden Spannung geregelt, so dass die schaltbedingten Verluste gering bleiben bzw. ein konventioneller Energiefluss von Doppelschichtkondensator 6 zum Akkumulator 7 und umgekehrt möglich ist.

Figur 2 zeigt anhand eines Schaltbildes ein vereinfachtes Ausführungsbeispiel eines durch einen Schaltregler erweiterten erfindungsgemäßen Transfer-Gates für eine erfindungsgemäße Schaltvorrichtung.

Die mit Bezugszeichen 20 bezeichnete erfindungsgemäße Schaltvorrichtung enthält einen Schaltregler 21 sowie ein parallel dazu angeordnetes Transfer-Gate. Diese Parallelschaltung aus Schaltregler 21 und Transfer-Gate 29 ist zwischen einem ersten Anschluss 22 und einem zweiten Anschluss 23 angeordnet. Diese beiden Anschlüsse 22, 23 können je nach dem, in welche Richtung ein Strom geschaltet werden soll, sowohl als Eingangsanschluss oder als Ausgangsanschluss betrieben werden. Im vorliegenden Ausführungsbeispiel wird der Anschluss 22 als Eingangsanschluss und der Anschluss 23 als Ausgangsanschluss betrieben.

Im Betrieb der erfindungsgemäßen Schaltvorrichtung 20 liegt an dem Eingangsanschluss 22 ein erstes Potenzial V1 und an dem Ausgangsanschluss 23 ein zweites Potenzial V2 an, so dass zwischen den Anschlüssen 22, 23 und damit über der Schaltvorrichtung 20 die Differenzspannung Vdiff = V2 - V1 anliegt.

Das erfindungsgemäße Transfer-Gate 20 besteht aus einer Parallelschaltung von jeweils zwei in Reihe zueinander geschalteten Leistungs-MOSFETs T1 - T6. Ein solches Transistorpaar definiert einen Lastpfad, so dass das Transfer-Gate 29 aus der Parallelschaltung mehrerer solcher Lastpfade aufgebaut ist. Die beiden Leistungs-MOSFETs T1 - T6 eines jeweiligen Lastpfades sind über ihre Gate-Anschlüsse sowie ihre Source-Anschlüsse miteinander kurzgeschlossen. Die jeweiligen DrainAnschlüsse der Leistungs-MOSFETs T1 - T6 sind entweder mit dem Eingangsanschluss 22 oder dem Ausgangsanschluss 23 verbunden. Die Reihenschaltung zweier Leistungs-MOSFETs T1 - T6 eines jeweiligen Lastpfades ergibt sich aus den entsprechenden, in Reihe zueinander angeordneten gesteuerten Strecken dieser Transistoren T1 - T6. Eine Reihenschaltung ist dadurch begründet, dass das Vorzeichen der Spannung am geöffneten Leistungs-MOSFET nicht definiert ist und die Substratdiode jeweils eines dieser Leistungs-MOSFETs T1 - T6 in Durchlassrichtung gepolt ist. Je nach Applikation und Bedarf können die drei parallel geschalteten Lastpfade des Transfer-Gates 29 an den Anschlüssen A - D durch weitere Stränge mit Leistungs-MOSFET-Paaren erweitert werden.

Der Schaltregler 21 besteht aus zwei Leistungstransistoren 27, 28, die über ihre Gate-Anschlüsse E, F angesteuert werden. Die genaue Ansteuerung dieser Leistungs-MOSFETs 27, 28 wird nachfolgend noch eingehend beschrieben. Die gesteuerten Strecken der Leistungs-MOSFETs 27, 28 sind über eine Drossel 24, beispielsweise eine Spule oder ein sonstiges induktives Element, miteinander gekoppelt. Die Sourceanschlüsse der Transistoren 27, 28 sind ferner jeweils über eine Freilaufdiode 25, 26 mit einem Bezugspotenzial GND verbunden. Die drainseitigen Anschlüsse der Transistoren 27, 28 sind mit den Anschlüssen 22, 23 verbunden.

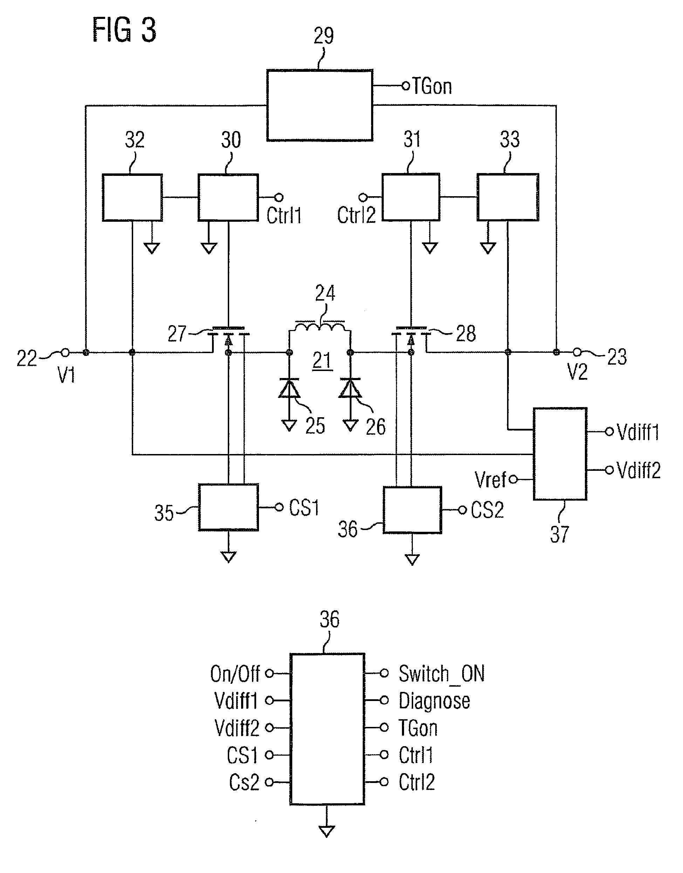

Figur 3 zeigt ein Blockschaltbild einer erfindungsgemäßen Schaltvorrichtung mit einem Transfer-Gate und einem Schaltregler aus Figur 2 sowie einer Ansteuerschaltung zu Ansteuerung des Schaltreglers und Transfer-Gates und weiteren Funktionseinheiten.

Zentrales Element der erfindungsgemäßen Schaltvorrichtung 20 ist eine Steuereinrichtung 36, die der Steuerung bzw. Regelung der Funktion des Schaltreglers 21 dient und somit deren Schaltvorgänge überwacht. Die Steuereinheit 36 kann beispielsweise als Programm gesteuerte Einrichtung, zum Beispiel als Mikrocontroller oder Mikroprozessor ausgebildet sein. Gesteuert durch ein externes Signal "On/Off" öffnet beziehungsweise schließt die Steuereinheit 36 die Verbindung zwischen den Anschlüssen 22, 23. Als Antwort auf diese Signale "On/Off" liefert die Steuereinheit 36 das Signal "Switch ON" an eine (nicht dargestellte) externe Steuereinheit, wenn der geforderte Schaltzustand des Schaltreglers 21 erreicht ist Ferner erzeugt sie ein weiteres Signal "Diagnose", welches der Überwachung der Gesamtfunktion des Schaltreglers 21 dient. Dieses Signal "Diagnose" ist erweiterbar bis zur detaillierten Fehleranalyse.

Der Schaltregler 21 besteht aus mehreren Funktionsgruppen, die zumeist symmetrisch zu der Induktivität 24 angeordnet sind. Dabei sind die Gate-Anschlüsse der Leistungs-MOSFETs 27, 28 mit Gate-Steuereinrichtungen 30, 31 verbunden. Zur Steuerung der Leistungs-MOSFETs 27, 28 werden diesen Gate-Steuereinrichtungen 30, 31 Steuersignale Ctrl1, Ctrl2 von der Steuereinheit 36 zugeführt. Die Gate-Steuereinrichtung 30, 31 steuert in Abhängigkeit dieser Signale Ctrl1, Ctrl2 die Leistungs-MOSFETs 27, 28 so an, dass jeweils einer dieser Leistungs-MOSFETs 27, 28 vom Takt der Signale Ctrl1, Ctrl2 eingeschaltet beziehungsweise ausgeschaltet wird.

Die Leistungs-MOSFETs 27, 28 sind im vorliegenden Ausführungsbeispiel als N-Kanal-MOSFETs ausgebildet. Zum Einschalten der Transistoren 27, 28 wird also ein Gatepotenzial oberhalb eines Drain-Potenzials und damit oberhalb eines Potenzials eines über die Anschlüsse 22, 23 eingekoppelten Signals V1, V2 benötigt. Zu diesem Zwecke ist jeweils eine Hilfsspannungsquelle 32, 33 für jeden Leistungs-MOSFETs 27, 28 vorgesehen, die mit den jeweiligen Gate-Steuereinrichtungen 30, 31 verbunden ist und die das jeweilige Gatepotenzial zur Ansteuerung der Transistoren 27, 28 bereitstellt.

Ferner sind Strommesseinrichtungen 35, 36 vorgesehen, die mit den Substratanschlüssen sowie Source-Anschlüssen der Leistungs-MOSFETs 27, 28 verbunden sind und die dazu ausgelegt sind, einen Strom im Lastpfad dieser Leistungs-MOSFETs 27, 28 zu messen. Ausgehend davon erzeugen die Strommesseinrichtung 35, 36 Strommesssignale CS1, CS2 (CS = Current Sense), die der Steuereinheit 36 zugeführt werden und die der Steuerung und Überwachung des Funktionsablaufes des Schaltreglers 21 dienen.

Ferner ist eine Spannungsmesseinrichtung 37 vorgesehen, die mit den Drain-Anschlüssen der Leistungs-MOSFETs 27, 28 verbunden ist. Die Spannungsmesseinrichtung 37 erfasst die Potenziale V1, V2 an den Anschlüssen 22, 23 und somit eine am Schaltregler 21 abfallende Differenzspannung Vdiff. Dabei detektiert die Spannungsmesseinrichtung 37 zum einen die Polarität dieser Differenzspannung Vdiff und erzeugt abhängig davon das digitale Signal Vdiff1. Zum anderen erfasst die Spannungsmesseinrichtung 37 den Absolutwert dieser Differenzspannung Vdiff und gibt den Betrag diese Differenzspannung Vdiff als Masse-bezogenen Spannungswert Vdiff2 aus. Für die Funktion der Spannungsmesseinrichtung 37 ist noch eine Referenzspannung Vref erforderlich. Die von der Spannungsmesseinrichtung 37 ausgangsseitig bereitgestellten Signale Vdiff1, Vdiff2 werden der Steuereinheit 36 zu Steuer- und Überwachungszwecken zugeführt.

Die Schaltungsanordnung in Figur 3 weist ferner einen Funktionsblock 29 auf, der das eigentliche Transfer-Gate enthält. Das Transfer-Gate 29 ist parallel zu dem Schaltregler 21 angeordnet und somit zwischen dem Eingang 22 und dem Ausgang 23 geschaltet. Über ein Steuersignal TGon der Steuereinheit 36 ist das Transfer-Gate 29 ein- bzw. ausschaltbar.

Nachfolgend wird die Funktionsweise der in Figur 3 dargestellten erfindungsgemäßen Schaltvorrichtung 20 kurz erläutert.

Zunächst sei angenommen, dass die Schaltvorrichtung 20 offen ist, das heißt, das Signal "On/Off" weist einen niedrigen logischen Pegel auf. Ein Potenzial V1 am Eingang 22 sei größer als das Potenzial V2 am Ausgang 23. Die Transistoren 27, 28 sowie eine Ladungspumpe zur Ansteuerung dieser Transistoren 27, 28 ist ausgeschaltet.

Für den Einschaltvorgang der Schaltvorrichtung 20 erhält die Steuereinheit 36 nun ein Steuersignal zum Schließen der Schaltvorrichtung 20, beispielsweise indem das Signal "On/Off" auf einen hohen logischen Pegel gesetzt wird.

### 1. Einschaltvorgang:

In einem ersten Schritt wird mittels des Schaltreglers 21 die Potenzialdifferenz Vdiff zwischen Eingang 22 und Ausgang 23 ausgeglichen, bevor der Schaltregler 21 in einem zweiten Schritt vollständig geschlossen ist.

### 2. Vorbereitung:

Zunächst wird eine Spannungsdifferenz Vdiff2 und eine Spannungspolarität Vdiff1 (Vdiff2 > 0, Vdiff1 = HIGH) über die Spannungsmesseinrichtung 37 gemessen und in der Steuereinheit 36 ausgewertet.

### 3. In der Steuereinheit 36 erfolgen nun die folgenden Entscheidungen:

- Die Spannungsdifferenz Vdiff2 ist größer als ein oberer Schwellenwert. Daraus folgt, dass ein Ladungsausgleich mittels eines Schaltreglerbetriebes erforderlich ist.
- Die Spannungsdifferenz Vdiff1 weist eine positive Polarität auf. Daraus folgt, dass der Transistor 27 als Schaltreglertransistor selektiert wird und der Transistor 28, der hier verpolt betrieben wird, statisch eingeschaltet wird. Ferner wird das Strommesssignal CS2 zur Strommessung selektiert.
- Das Transfer-Gate 29 bleibt zunächst ausgeschaltet.
- Sollte die Steuereinheit 36 feststellen, dass die Spannungsdifferenz Vdiff2 kleiner als ein unterer Schwellenwert ist, so wird an dieser Stelle direkt zum nachstehenden Punkt 5. gesprungen.

### 4. Schaltreglerbetrieb:

Beim Einschalten des Transistors 27 steigt der Strom durch die Induktivität 24 stetig an, so dass das Strommesssignal CS2, welches den sourceseitigen Strom des Transistors 28 und damit den Strom aus der Induktivität 24 abbildet, ebenfalls eine stetig wachsende Spannung aufweist. Das Strommesssignal CS2 wird gegen einen oberen Grenzwert überwacht. Erreicht der durch die gesteuerte Strecke des Transistors 27 und damit durch die Spule 24 fließende Laststrom den oberen Grenzwert, dann wird der Transistor 27 abgeschaltet. Zudem wird die Einschaltdauer des Transistors 27 mit einem zweiten oberen Grenzwert verglichen. Der Laststrom durch die Induktivität 24 fließt nun durch die Freilaufdiode 25 weiter, wobei er dabei stetig sinkt. Das Strommesssignal CS2 wird nun gegen einen unteren Grenzwert des Laststromes überwacht. Erreicht der Laststrom den unteren Stromgrenzwert, dann wird der Transistor 27 wieder eingeschaltet. In der Induktivität 24 entsteht so ein dreieckförmiger Verlauf des Laststromes, der zwischen einem oberen und einem unteren Stromgrenzwert hin und her pendelt. Es ergibt sich somit ein Stromfluss vom Eingang 22 zum Ausgang der Schaltregleranordnung 21, der einen dreieckförmigen Stromverlauf aufweist.

### 5. Übergang vom Schaltreglerbetrieb zum vollständigen Einschalten:

Wird der Schaltregler 21 für längere Zeit im Schaltreglerbetrieb entsprechend Punkt 4. betrieben, dann wird dadurch bedingt die Differenzspannung Vdiff am Schaltregler 21 mit der Zeit abnehmen. Dadurch nimmt gleichzeitig die Ladezeit der Induktivität 24 zu. Erreicht oder überschreitet diese Ladezeit einen oberen vorgegebenen Grenzwert, so kann davon ausgegangen werden, dass die Spannungsdifferenz Vdiff am Schaltregler 21 minimal ist. Nun kann das parallel zum Schaltregler angeordnete Transfer-Gate 29 gefahrlos geschlossen und damit eingeschaltet werden. Zu diesem Zwecke wird der Transistor 27 des Schaltreglers 21 nun dauerhaft eingeschaltet. Ebenso wird über das Signal TGon das Transfer-Gate 29 eingeschaltet, so dass die gesamte Schaltvorrichtung nun eingeschaltet ist. Die Steuereinheit 36 schaltet nun das Signal "Switch ON" von einem niedrigen logischen Pegel auf einen hohen logischen Pegel. Auf diese Weise wird der nun vorliegende eingeschaltete Schalterzustand der Schaltvorrichtung nach extern signalisiert.

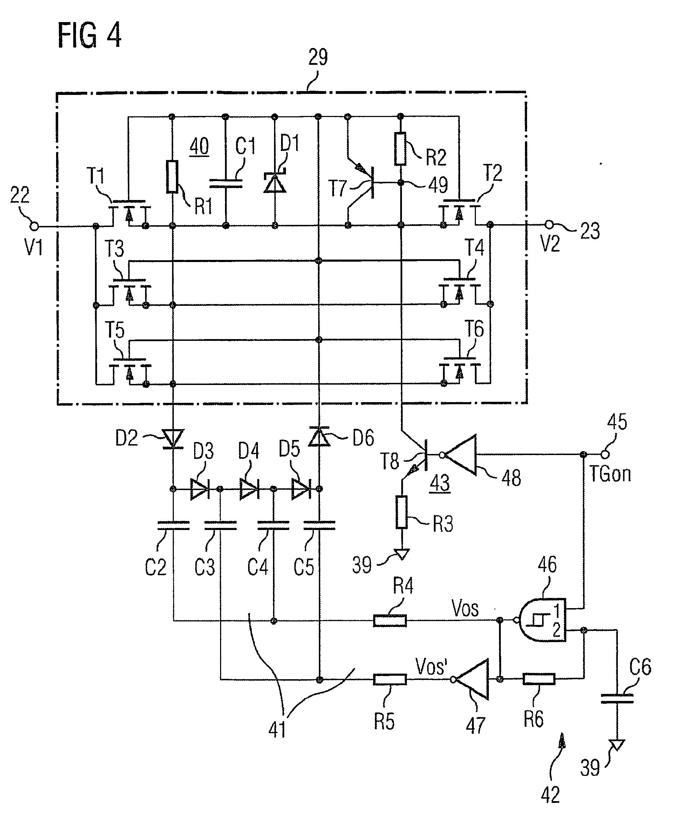

Figur 4 zeigt anhand eines detaillierten Schaltbildes ein mit einer Ladungspumpe und Ansteuerschaltung ausgestattetes Transfer-Gate einer erfindungsgemäßen Schaltvorrichtung.

Das Transfer-Gate 29 weist im vorliegenden Ausführungsbeispiel genau drei parallel geschaltete Stränge auf, wobei jeweils ein Strang zwei Leistungs-MOSFETs T1 - T6 aufweist. Das Transfer-Gate 29 weist im Wesentlichen den schaltungstechnischen Aufbau des anhand von Figur 2 beschriebenen Transfer-Gates auf.

Gate-Anschlüsse und Source-Anschlüsse der Transistoren T1 - T6 sind miteinander über eine Gate-Schutzbeschaltung 40 gekoppelt. Die Gate-Schutzbeschaltung 40 enthält eine Parallelschaltung aus einem Kondensator C1, einem Widerstand R1 sowie einer Zehnerdiode D1. Diese Parallelschaltung schützt die Gate-Anschlüsse der Transistoren T1 - T6 einerseits vor einem negativen Gate-Potenzial und andererseits vor einer Überspannung, die die Gate-Anschlüsse zerstören könnte und damit die Transistoren T1 - T6 funktionsunfähig machen könnte.

Zur Ansteuerung des Transfer-Gates 29 ist ferner eine Ladungspumpe 41, ein schaltbarer Oszillator 42 sowie eine Abschalteinrichtung 43 vorgesehen.

Der schaltbare Oszillator 42 enthält ein logisches Gatter 46 sowie einen Kondensator C6 und einen Rückkopplungswiderstand R6. Das logische Gatter 46 weist bei Einkopplung eines Eingangssignals ein Hysterese-behaftetes Schaltverhalten auf. Vorteilhafterweise ist das logische Gatter 46 als Schmitt-Trigger-Schaltung ausgebildet. Das logische Gatter 46 weist zwei Eingangsanschlüsse auf, wobei ein erster Eingangsanschluss mit dem Steueranschluss 45 zur Einkopplung des Steuersignals TGon verbunden ist. Der zweite Eingangsanschluss ist über den Kondensator C6 mit einem Versorgungsanschluss 39 für ein Versorgungspotenzial, beispielsweise der Bezugsmasse GND, verbunden. Zwischen dem zweiten Eingangsanschluss und dem Ausgang des logischen Gatters 46 ist ein Rückkopplungswiderstand R6 angeordnet.

Dem schaltbaren Oszillator 42 ist die Ladungspumpe 41 nachgeschaltet. Die Ladungspumpe 41 enthält einen Inverter 47, die Widerstände R4, R5, die Kondensatoren C2 - C5 und die Dioden D2 - D6. Die Ladungspumpe 41 besteht aus einem Entladepfad und einem Ladepfad. Der Ladepfad ist zwischen dem Ausgang des schaltbaren Oszillators 42 und den Steueranschlüssen der Transistoren T1 - T6 des Transfer-Gates 29 angeordnet. Der Entladepfad ist zwischen den Source-Anschlüssen dieser Transistoren T1 - T6 und dem Ausgang des schaltbaren Oszillators 42 angeordnet. Der Ladepfad besteht aus dem Inverter 47, dem Widerstand R5 sowie der Parallelschaltung der Kondensatoren C3, C5, die insgesamt in Reihe geschaltet sind. Der Entladepfad besteht aus der Parallelschaltung der Kondensatoren C2, C4 und dem Widerstand R4, die zueinander in Reihe geschaltet sind. Zur Kopplung des Ladepfades und Entladepfades sind die Dioden D2 - D6 vorgesehen.

Die Abschalteinrichtung 43 enthält einen Inverter 48, die Transistoren T7, T8 und die Widerstände R2, R3. Der Inverter 48 ist eingangsseitig mit dem Anschluss 45 für das Steuersignal TGon verbunden. Ausgangsseitig ist der Inverter 48 mit dem Steueranschluss des Transistors T8 verbunden. Der Transistor T8 ist emitterseitig über den Widerstand R3 mit dem Versorgungsanschluss 39 verbunden. Kollektorseitig ist der Transistor T8 über den Widerstand R2 mit den Gate-Anschlüssen der Transistoren T1 - T6 verbunden. Ein Potenzial am Abgriff 49 zwischen dem Widerstand R2 und dem Kollektor des Transistors T8 dient der Ansteuerung des Transistors T7, dessen gesteuerte Strecke zwischen den Gate-Anschlüssen und Source-Anschlüssen der Transistoren T1 - T6 angeordnet ist.

Nachfolgend sei die Funktionsweise der Schaltungsanordnung in Figur 4 kurz erläutert:

Die Polarität der am Transfer-Gate 29 abfallenden Differenzspannung Vdiff = V2 - V1 ist undefiniert. Aus diesem Grunde müssen jeweils zwei der Leistungs-MOSFETs T1 - T6 bezüglich derer gesteuerten Strecken in Reihe zueinander geschaltet werden, um eine Aktivierung der bei einem jeweiligen Leistungs-MOSFET T1 - T6 inhärent vorhandene Body-Diode zu verhindern. Zur Erhöhung der Stromtragfähigkeit des Transfer-Gates 29 sind mehrere, im vorliegenden Beispiel drei Stränge, mit Transistorpaaren T1 - T6 parallel zueinander angeordnet, wobei jeder Strang dieser Parallelschaltung dann einen Teil des Gesamtstromes trägt. Auf diese Weise kann auf sehr einfache und preisgünstige Weise ein Transfer-Gate 29 bereitgestellt werden, welches in der Lage ist, sehr hohe Ströme im Bereich bis zu 1 kA zu schalten. Hierzu können vorteilhafterweise handelsübliche, preiswerte Transistoren T1 - T6 (Leistungs-MOSFETs), die zum Beispiel auf 100 A ausgelegt sind, verwendet werden.

Da sowohl die Source-Anschlüsse als auch Gate-Anschlüsse dieser Leistungs-MOSFETs T1 - T6 parallel geschaltet sind, kann durch Anlegen einer ausreichend großen positiven Gate-Source-Spannung - typischerweise von etwa 10 - 15 V - das gesamte Transfer-Gate 29 eingeschaltet werden.

Das logische Gatter 46 weist vorteilhafterweise ein Hysterese behaftetes Schaltverhalten der Eingänge auf. Liegt zum Beispiel an dem ersten Eingangsanschluss des logischen Gatters 46 ein Steuersignal TGon an, welches einen hohen logischen Pegel aufweist, so entsteht am Ausgang des logischen Gatters 46 ein oszillierendes Signal, dessen Schwingungsperiode durch die Werte von Rückkopplungswiderstand R6 und Kondensator C6 bestimmt ist.

Dieses oszillierende Ausgangssignal Vos des schaltbaren Oszillators 42 treibt den Inverter 47 derart, dass am Ausgang des Gatters 46 und am Ausgang des Inverters 47 nun zwei, um 180° Phasen verschobene Rechtecksignale Vos, Vos' vorhanden sind. Diese beiden Signale, Vos, Vos' treiben nun - entkoppelt über die beiden Strombegrenzerwiderstände R4, R5 - die gegenphasig aufgebaute Ladungspumpe 41 an. Die Gegenphasigkeit begründet sich aus der Verwendung der Dioden D2 - D6. Mit jedem Takt des Oszillatorsignals Vos wird nun mittels der Kondensatoren C2 - C5 und der Dioden D2, D6 Ladung von der Versorgungssp annung - die typischerweise etwa 5 V beträgt - in den Ladekondensator C1 verschoben. An dem zwischen den Gate-Anschlüssen und Source-Anschlüssen der Transistoren T1 - T6 angeordnete Ladekondensator C1 baut sich dadurch eine Spannung auf, durch welche die Transistoren T1 - T6 entsprechend eingeschaltet werden.

Die ausgewählte Realisierung der Ladungspumpe 41 erlaubt eine gleichspannungsmäßige Entkopplung der Eingangspotenziale der Ladungspumpe 41, das heißt der Signale Vos, Vos', und dem Ausgangspotenzial der Ladungspumpe 41, das heißt, dem Source-Potenzial der Transistoren T1 - T6.

Zusätzlich wird über das Steuersignal TGon und den Inverter 48 der Transistor T8 und damit der Transistor T7 geschaltet. Ist das Signal TGon auf einem niedrigem Potenzial, so ist der Transistor T8 eingeschaltet, während er bei einem hohem Potenzial ausgeschaltet ist. Dadurch bleibt der Transistor T8 bei aktivierter Ladungspumpe 41 ausgeschaltet. Wird die Ladungspumpe 41 durch einen Pegelwechsel des Signals TGon von einem hohen logischen Pegel auf einen niedrigen logischen Pegel ausgeschaltet, so wird der Transistor T8 eingeschaltet. Damit ist die Steuerspannung zwischen den Gate-Anschlüssen und Source-Anschlüssen der Transistoren T1 - T6 kurzgeschlossen, so dass diese Transistoren T1 - T6 ausgeschaltet werden. Auf diese Weise ist es möglich, das Transfer-Gate 29 sehr schnell auszuschalten, das heißt in den nicht leitenden Zustand zu steuern.

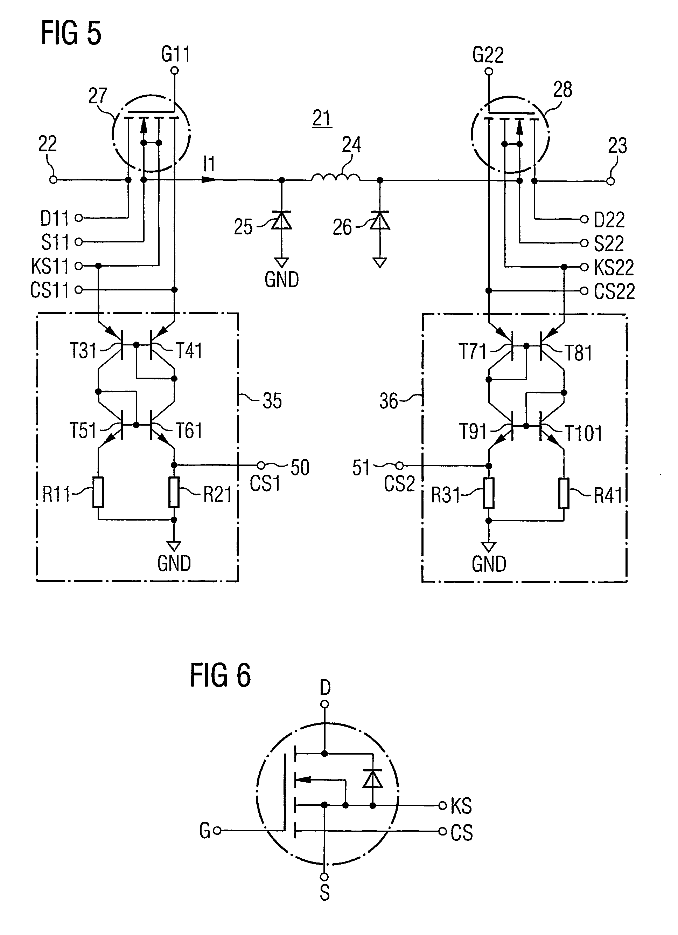

Figur 5 zeigt ein detailliertes Schaltbild eines Schaltreglers der erfindungsgemäßen Schaltvorrichtung aus Figur 3.

Der Schaltregler 21 enthält, wie bereits erwähnt, im Wesentlichen die beiden Transistoren 27, 28 sowie die dazwischen angeordneten Freilaufdioden 25, 26 und die Induktivität 24. Wesentliches Element des Schaltreglers 21 ist dessen Ansteuerung.

Der im Schaltregler 21 eingangsseitig angeordnete Transistor 27 bildet zusammen mit der Freilaufdiode 25 und der Induktivität 24 die Grundelemente eines bekannten Abwärtsreglers. Im Falle eines eingangsseitig über den Eingangsanschluss 22 eingekoppelten Signals ist demnach die Diode 26 inaktiv und der Transistor 28 statisch eingeschaltet. Wird nun der Transistor 27 über das Eingangssignal V1 eingeschaltet, so steigt der Strom I1 durch die Induktivität 24 getrieben von der Spannungsdifferenz Vdiff = V2 - V1 zwischen Eingang 22 und Ausgang 23 stetig an. Erreicht dieser Strom I1 einen vorbestimmten oberen Stromwert, dann schaltet der Transistor 27 aus und der Strom I1 durch die Induktivität 24 fließt nun durch die Freilaufdiode 25 weiter. Der Strom I1 sinkt dadurch solange ab, bis ein unterer Schwellwert erreicht wird. Zu diesem Zeitpunkt schaltet der Transistor 27 wieder ein und der Vorgang beginnt erneut. In der Folge ergibt sich ein Stromfluss I1 vom Eingang 22 zum Ausgang 23.

Der Strom I1, der durch die Induktivität 24 fließt, fließt lediglich während der Aufladephase auch durch den Transistor 27. In der Entladephase fließt der Strom I1 nicht über den Transistor 27, sondern über die Freilaufdiode 25. Zugleich fließt der Strom I1 in beiden Phasen, also in der Aufladephase als auch der Entladephase, durch den invers betriebenen, statisch eingeschalteten Transistor 28.

Im vorliegenden Ausführungsbeispiel sind die Transistoren 27, 28 als Leistungs-MOSFETs, insbesondere als N-Kanal Leistungs-MOSFETs, ausgebildet. Solche Leistung-MOSFETs bestehen typischerweise aus einer Vielzahl von Transistorzellen. Jede der Transistorzellen enthält dabei zumindest einen Einzeltransistor, wobei die stromführenden Lastpfade der verschiedenen Einzeltransistoren zueinander parallel geschaltet sind. Die Parallelschaltung dieser Einzeltransistoren ergibt somit eine entsprechend der Anzahl der Transistorzellen signifikant höhere Stromtragfähigkeit.

Die Transistoren 27, 28 sind dabei vorzugsweise als so genannte Sense-MOSFETs 27, 28 ausgebildet. Figur 6 zeigt die Anschlussbelegung eines solchen als Sense-MOSFET ausgebildeten Transistors 27, 28, wobei die Anschlussbelegung der in Figur 5 entsprechen soll.

Ein solcher Sense-MOSFET 27 bietet neben seiner üblichen Funktion zusätzlich auch die Möglichkeit, einen Strom über seine gesteuerte Strecke zu messen. Ein Sense-MOSFET 27 weist - ähnlich wie ein herkömmlicher MOSFET - einen Gate-Anschluss G zur Steuerung des Stromflusses sowie einen Source-Anschluss S und einen Drain-Anschluss D, über die der gesteuerte Strom fließt, auf. Bei einem Sense-MOSFET ist darüber hinaus ein kleiner Anteil der Transistorzellen mit einem eigenen Anschluss CS (CS = Current Sense) versehen, so dass sich ein geringfügiger Anteil des sourceseitigen Laststromes I1 abgreifen lässt. Ein Potenzial am Anschluss KS (KS = Kelvin Source) bildet den Bezug der Strommessung. Über den Anschluss KS ist somit gewissermaßen im Stile einer Vierdrahtmessung ein Fehlereintrag durch einen Spannungsabfall, der im Widerstand des Bond-Drahtes am Anschluss S1 auftritt, vermeidbar. Um eine möglichst hohe Messgenauigkeit zu realisieren, muss allerdings die Spannungsdifferenz zwischen den Anschlüssen CS und KS möglichst klein sein, idealerweise sehr viel kleiner als 100 mV. Dies setzt eine möglichst kleine Eingangsimpedanz der Strommessschaltung voraus, die mit einem Sense-MOSFET entsprechend Figur 6 auch gewährleistet ist.

Der besondere Vorteil bei Verwendung eines Sense-MOSFETs entsprechend Figur 6 - im Gegensatz zu einer Messung des Spannungsabfalls an einem Messwiderstand (Shunt-Widerstand) - besteht in der wesentlich geringeren Verlustleistung, da nur ein sehr kleiner Teil des Source-Stromes für die Messwertbildung herangezogen wird. Ein Sense-MOSFET weist typischerweise einige 10.000 - 100.000 Transistorzellen auf. Für eine ausreichend repräsentative Strommessung reicht es hier vollständig aus, lediglich einige wenige dieser Transistorzellen für die Strommessung heranzuziehen.

Für die Strommessung an den Transistoren 27, 28 sind jeweils Strommesseinrichtungen 35, 36 vorgesehen. Die Strommesseinrichtung 35 enthält zwei Messpfade, die einerseits mit einem Versorgungsanschluss 39 mit dem Bezugspotenzial und die andererseits mit Messanschlüssen KS11, CS11 des Sense-MOSFETs 27 verbunden sind. Der erste Strommesspfad besteht aus dem Widerstand R11 sowie den gesteuerten Strecken der Transistoren T51, T31, die zueinander in Reihe geschaltet sind und zwischen dem Versorgungsanschluss 39 und dem Anschluss KS11 angeordnet sind. Der zweite Strommesspfad besteht aus dem Widerstand R21 sowie den gesteuerten Strecken der Transistoren T61, T41, die zwischen dem Versorgungsanschluss 39 und dem Anschluss CS11 in Reihe angeordnet sind. Die Transistoren T51, T61 sowie die Transistoren T31, T41 sind jeweils in Stromspiegelschaltung angeordnet, wobei jeweils die Transistoren T51 und T41 die Transistordiode der jeweiligen Stromspiegel T51, T61; T31, T41 bilden. Ein Abgriff zwischen dem Widerstand R21 und dem Transistor T61 bildet den Ausgangsanschluss 50, an dem das Strommesssignal CS1 abgreifbar ist.

Die Messung eines durch den Transistor 27 fließenden Laststromes erfolgt auf der Basis eines Bezugspotenzials KS11, welches - je nach Höhe der angelegten externen Potenziale V1, V2 an den Anschlüssen 22, 23 - zwischen einem Minimalwert und etwa 60 V schwankt. Zur besseren Weiterverarbeitung in der Steuereinheit 30 erfolgt nun vorteilhafterweise eine Potenzialverschiebung des Strommesssignals CS1. Mittels der in jeder Strommesseinrichtung 35 angeordneten Stromspiegelschaltungen kann dies in besonders eleganter Weise realisiert werden. Dabei muss die Eingangsimpedanz der Strommesseinrichtungen 35 beziehungsweise der Stromspiegelschaltungen möglichst niedrig sein, um ein geeignetes Strommesssignal vom Sense-MOSFET 27 abzugreifen. Mittels des Widerstandes R21 kann der gemessene Strom dann in ein zur Weiterverarbeitung günstiges Potenzial CS1 gewandelt werden, welches am Ausgang 50 als Strommesssignal CS1 abgreifbar ist.

Die Strommesseinrichtung 36 ist äquivalent zu der Strommesseinrichtung 35 aufgebaut. Zu beachten ist hier allerdings, dass der Transistor 28 invers betrieben wird und deshalb die Anschlüsse der Strommessschaltung am Transistor 28 gegenüber dem Normalbetrieb vertauscht sind.

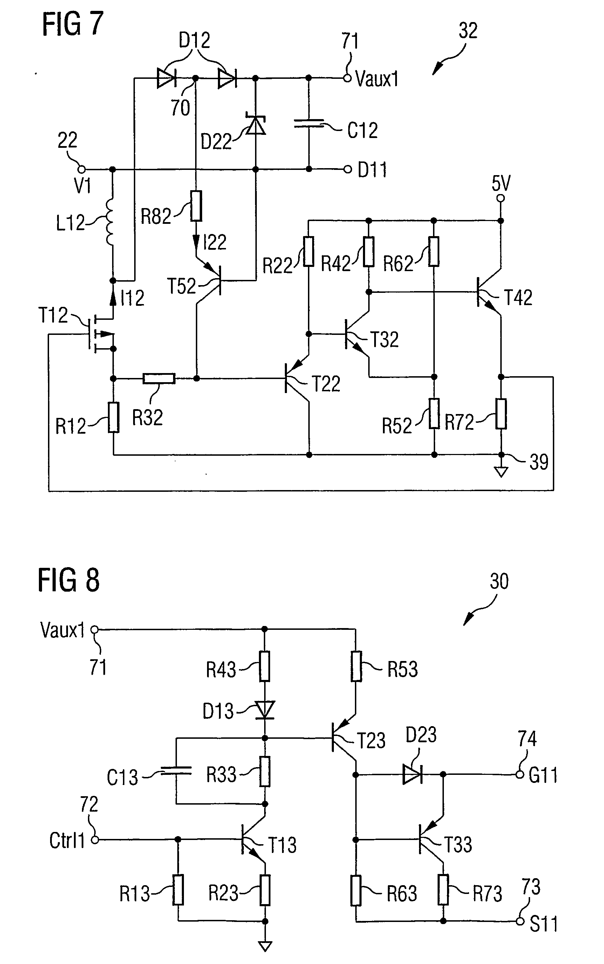

Figur 7 zeigt das Schaltbild einer Hilfsspannungsquelle zur Versorgung der Gate-Steuereinrichtung aus Figur 3.

Die Hilfsspannungsquelle 32 weist einen Transistor T12, die Induktivität L12 und die Doppeldiode D12 auf, die in der Beschaltung aus Figur 7 die Grundkomponenten eines Aufwärtsreglers bilden.

Wird der Transistor T12, bedingt durch ein hohes Potenzial am Emitter des Transistors T42 eingeschaltet, so fließt ein zunehmender Strom durch die Induktivität L12. Dieser Strom I12 fließt zugleich auch durch den Strommesswiderstand R12. Die daraus entstehende Spannung wird über den Widerstand R32 der Basis des Transistors T22 zugeleitet. Durch die Verbindung eines PNP-Bipolartransistors T22 mit einem NPN-Bipolartransistor T32 wird der Einfluss der Basis-EmitterDiode des Transistors T32 weitestgehend kompensiert, so dass in Summe ein Transistor mit sehr geringer Basis-Emitter-Spannungsdifferenz entsteht. Diese in Kaskade geschalteten Transistoren T22, T32 bilden somit gewissermaßen einen "Supertransistor".

Das Emitterpotenzial des Transistors T32 wird durch den Spannungsteiler, bestehend aus den Widerständen R52, R62, auf einen oberen Schwellenwert festgelegt. Ist der Strom I12 durch den Transistor T12 nahe Null, so ist das Basispotenzial des "Supertransistors" T22, T32 ebenfalls Null und der Transistor T12 sperrt. Über den Widerstand R42 wird das Kollektorpotenzial dieses "Supertransistors" T32, T22 auf etwa 5 V angehoben, mit der Folge, dass die Basisspannung des damit verbundenen Transistor T42 ebenfalls steigt. Die Emitterspannung des Transistors T42 steigt somit ebenfalls bis auf etwa 4,3 V an. Dieser Transistor T42 ist emitterseitig mit dem Steueranschluss des Transistors T12 gekoppelt. Der genannte Spannungswert von 4,3 V reicht aus, um den Transistor T12 einzuschalten. Mit steigendem Strom I12 durch die Elemente L12, T12, R12 steigt somit die über dem Widerstand R12 abfallende Spannung und somit auch die über dem Widerstand R32 abfallende Spannung zur Ansteuerung der Basis des "Supertransistors" T22, T32. Ist nun ein Wert erreicht, der dem am Emitter des Transistors T32 eingestellten oberen Schwellenwert entspricht, so schaltet der Transistor T32 ein, woraufhin sein Kollektorpotenzial sinkt. Als Folge davon sinkt auch die Emitterspannung des Transistors T42 und damit die Gate-Spannung des Transistors T12. Der Transistor T12 schaltet daraufhin aus. Getrieben durch die Induktionsspannung über der als Drossel fungierenden Spule L12 wird die Spannung am Drain-Anschluss des Transistors T12 nun ansteigen, bis die Doppeldiode D1 anfängt, Strom zu leiten. Die in der Induktivität L12 gespeicherte Energie entlädt sich nun über den Kondensator C12 beziehungsweise bei einem Erreichen der Durchbruchsspannung der Zehnerdiode D22 über diese Diode D22.

Zugleich steigt das Potenzial am Mittelabgriff 70 der Doppeldiode D12 über das am Eingang 22 anliegende Potenzial V1, woraufhin der Transistor T52 leitend wird und ein durch den Widerstand R82 begrenzter Strom I22 über die gesteuerte Strecke des Transistors T52 fließt. Dieser Strom I22 erzeugt am Widerstand R32 einen Spannungsanstieg, der den Transistor T22, T32 einschaltet. Dadurch wird das Basispotenzial des Transistors T42 auf einen niedrigen Wert gehalten und in Folge dessen bleibt der Transistor T12 ausgeschaltet.

Ist die Induktivität L12 nun vollständig entladen, bricht die Spannung über der Induktivität L12 zusammen. Der Transistor 52 sperrt ebenfalls und die Spannung am Widerstand R32 sinkt gegen Null. Dadurch schaltet der "Supertransistor" T22, T32 wiederum aus, woraufhin sein Kollektorpotenzial ansteigt. Die Emitterspannung des Transistors T42 steigt nun ebenfalls und der Transistor T12 wird wiederum eingeschaltet. Dadurch wird in der Induktivität L12 ein dreieckförmiger Strom erzeugt, der zwischen dem oberen Schwellenwert und Null hin und her pendelt. In der Ladephase entnimmt die Induktivität L12 Ladung aus dem am Eingang 22 anliegenden Potenzial V1 und in der Entladephase wird diese Ladung an den Speicherkondensator C12 weitergegeben. Das dadurch entstehende Potenzial Vaux1 ist am Ausgang 71 abgreifbar und versorgt die Gate-Steuereinrichtung 31 jeweils eines Leistungs-MOSFETs, im vorliegenden Fall des Leistungs-MOSFETs 27.

Figur 8 zeigt ein Schaltbild einer Gate-Steuereinrichtung 30 zur Steuerung des Schaltreglers aus Figur 3.

Über ein am Versorgungsanschluss 71 einkoppelbares, von der Hilfsspannungsquelle 32 erzeugtes Versorgungspotenzial Vaux1 ist die Gate-Steuereinrichtung 30 mit einem Versorgungspotenzial Vaux1 versorgbar. Die Gate-Steuereinrichtung 30 weist ferner einen weiteren Steueranschluss 72 auf, der mit der Steuereinrichtung 36 gekoppelt ist und über den ein Steuersignal Ctrl1 einkoppelbar ist. Über den Pegel dieses Signals Ctrl1 bestimmt die Steuereinheit 36 beziehungsweise die Gate-Steuereinrichtung 30 den Schaltzustand des Leistungs-MOSFETs 27. Weist das Steuersignal Ctrl1 einen niedrigen logischen Pegel (LOW) auf, so ist der Transistor T13 stromlos geschaltet. Der Transistor T23 ist dann ebenfalls ausgeschaltet, da seine Basis-Emitter-Spannung in diesem Falle Null ist. Der Widerstand R63 definiert das Basispotenzial des Transistors T33 auf die Source-Spannung des Leistungs-MOSFETs 27, woraufhin der Transistor T33 durchschaltet und sich das Potenzial am Anschluss 74 dem Wert des Potenzials am Anschluss 73 weitgehend annähert. Der Anschluss 73 ist mit dem Source-Anschluss S11, der Anschluss 74 mit dem Gate-Anschluss G11 des Leistungs-MOSFETs 27 verbunden. Als Folge ist die Gate-Source-Spannung des Leistungs-MOSFETs 27 annähernd Null, so dass dieser Leistungs-MOSFET 27 ausgeschaltet ist.

Springt das Steuersignal Ctrl1 am Steuereingang 72, gesteuert durch die Steuereinheit 36, auf einen hohen logischen Pegel (HIGH), so wird der Transistor T13 leitend. Der Transistor T13 wirkt zusammen mit dem Widerstand R23 als Stromquelle, deren Wert im Wesentlichen durch den Pegel des Steuersignals Ctrl1 und den Wert des Widerstands R23 bestimmt ist. Der Laststrom durch diesen Transistor T13 dient der Basisansteuerung des Transistors T23, der mittels den Widerständen R43, R53 und der Diode D13 als Stromspiegel konfiguriert ist. Der Stromfluss durch den Transistor T23 lädt nun über den Anschluss 74 die Gate-Kapazität des Leistungs-MOSFETs 27 auf. Dadurch steigt die Gate-Source-Spannung (Spannung zwischen den Anschlüssen 73, 74) des Leistungs-MOSFETs 27 und der Leistungs-MOSFET 27 wird letztlich eingeschaltet.

Springt das Steuersignal Ctrl1 auf einen niedrigen logischen Pegel, so schaltet der Transistor T13 aus, woraufhin der Transistor T23 ebenfalls stromlos wird. Der Transistor T33 wird nun über den Widerstand R63 leitend geschaltet, woraufhin die Gate-Source Spannung des MOS-Transistors 27 über den Transistor T33 und den Widerstand R73 auf annähernd 0 V gesteuert wird. Der Transistor T27 schaltet daraufhin aus.

In gleicher Weise wird der Leistungs-MOSFET 28 über eine äquivalent ausgebildete Gate-Steuereinrichtung 32 eingeschaltet beziehungsweise ausgeschaltet werden.

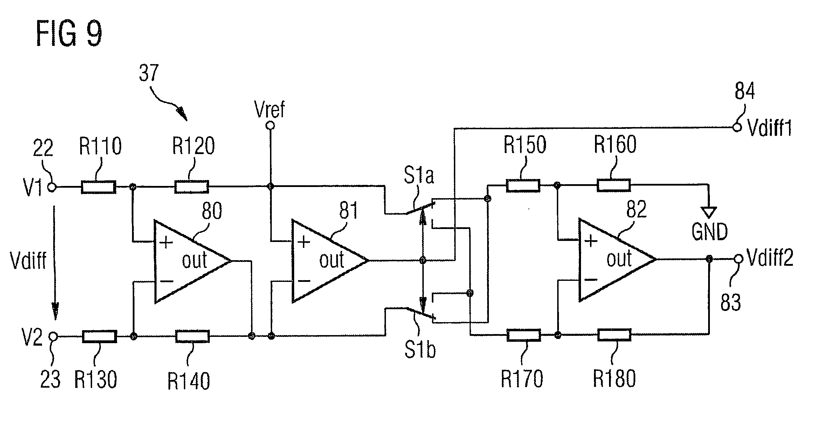

Figur 9 zeigt ein Schaltbild der Spannungsmesseinrichtung 37 aus Figur 3.

Die Spannungsmesseinrichtung 37 besteht im Wesentlichen aus einem ersten Differenzverstärker 80, einem Spannungskomparator 81, einem zweipoligen Umschalter S1a, S1b und einem zweiten Differenzverstärker 82.

Der erste Differenzverstärker 80 ist eingangsseitig über die Widerstände R110, R130 mit den Anschlüssen 22, 23 verbunden. Der erste Differenzverstärker 80 übersetzt somit die zwischen den Anschlüssen 22, 23 anliegende Differenzspannung Vdiff = V2 - V1 auf eine Spannung bezüglich einer Referenzspannung Vref. Für den Fall, dass der erste Differenzverstärker 80 mit einer Versorgungsspannung von 5 V versorgt wird, ist eine Referenzspannung Vref = 2,5 V vorteilhaft, da die gemessene Differenzspannung Vdiff sowohl positive als auch negative Polarität aufweisen kann. Nachfolgend sei eine positive Polarität der Differenzspannung Vdiff gegeben.

Die Spannungsdifferenz Vdiff zwischen den Anschlüssen 22, 23 wird in durch die Differenzverstärkeranordnung bestehend aus den Widerständen R110, R120, R130, R140 und dem ersten Differenzverstärker 80 erfasst und in eine auf eine vorgegebene Referenzspannung Vref bezogene Gleichspannung umgewandelt. Beträgt die Potenzialdifferenz 0 V, so ist am Ausgang des Differenzverstärkers 80 eine Spannung Vref abgreifbar.

Zu beachten ist ferner, dass die Eingangspotenziale V1, V2 unter Umständen relativ hohe Werte im Bereich von etwa 60 V aufweisen können, die Differenzspannung Vdiff = V2 - V1 aber mit zunehmendem Ladungsausgleich relativ gering wird, zum Beispiel im Bereich von kleiner als 1 V. Aus diesem Grunde muss der erste Differenzverstärker 80 eine möglichst gute Gleichtaktunterdrückung aufweisen.

Ein dem ersten Differenzverstärker 80 nachgeschalteter Spannungskomparator 81 vergleicht nun die Ausgangsspannung des ersten Differenzverstärkers 80 mit dem Referenzpotenzial Vref. Abhängig davon, ob diese Ausgangsspannung größer oder kleiner als die Referenzspannung Vref ist, steuert der Spannungskomparator 81 ausgangsseitig einen der beiden steuerbaren Schalter S1a, S1b an. Die steuerbaren Schalter S1a, S1b sind miteinander gekoppelt und können beispielsweise als CMOS-Umschalter ausgebildet sein.

Durch dieses gesteuerte Umschalten der miteinander gekoppelten Schalter S1a, S1b wird ein nachgeschalteter, zweiter Differenzverstärker 82 stets mit einem Signal gleicher Polarität angesteuert. Im vorliegenden Ausführungsbeispiel wird der zweite Differenzverstärker 82 stets mit einer positiven Eingangsspannung angesteuert. Der zweite Differenzverstärker 82 ist mit Widerständen R150, R160, R170, R180 beschaltet. Da das Bezugspotenzial GND des zweiten Differenzverstärkers 82 ein Massepotenzial GND ist (in Figur 9 nicht dargestellt), erzeugt der zweite Differenzverstärker 82 somit den Absolutwert der eingangsseitig in die Spannungsmesseinrichtung 37 eingekoppelten Differenzspannung Vdiff bezogen auf die Bezugsmasse. Dieses ausgangsseitig am zweiten Differenzverstärker 82 anliegende Signal Vdiff2 ist am Ausgangsanschluss 83 abgreifbar und kann somit der Steuereinheit 36 zugeführt werden. Das Signal Vdiff2 bildet somit ein Spannungsmesssignal, welches den Absolutwert bzw. den Betrag der Differenzspannung Vdiff angibt.

Das Ausgangssignal des Komparators 81 bildet gleichsam das Signal Vdiff1, welches am Ausgangsanschluss 84 abgreifbar ist und der Steuereinheit 36 der Differenzspannung Vdiff zugeleitet wird. Das Signal Vdiff1 bildet somit ein Spannungsmesssignal, welches die Polarität bzw. das Vorzeichen der Differenzspannung Vdiff angibt.

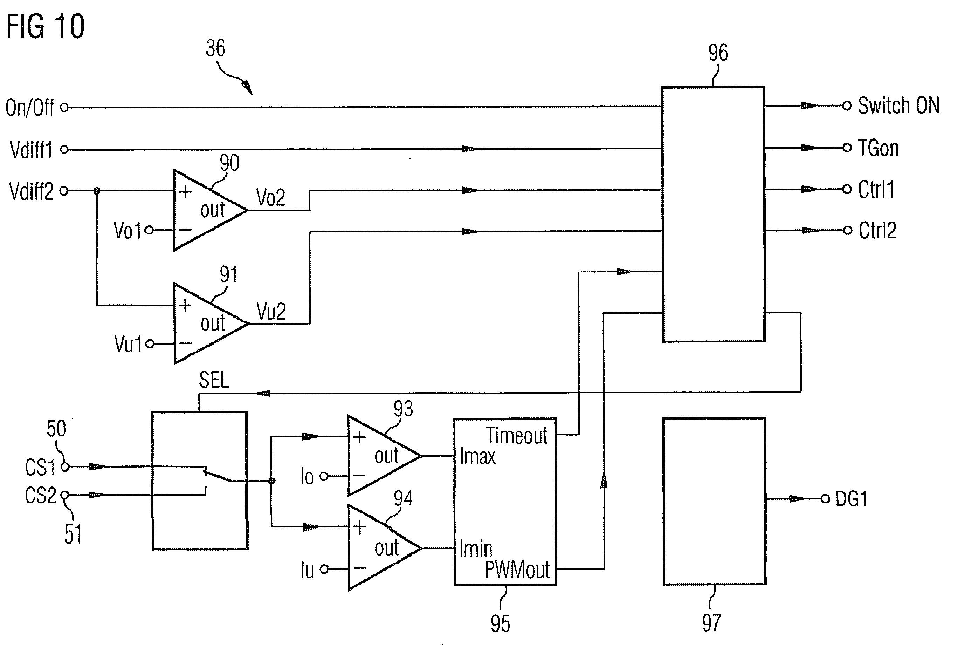

Figur 10 zeigt anhand eines Blockschaltbildes den Aufbau der Steuereinheit 36 für eine erfindungsgemäße Schalteinrichtung.

Die Steuereinheit 36 besteht aus zwei Komparatoren 90, 91, einem Umschalter 92, zwei weiteren Komparatoren 93, 94, einem PWM-Generator 95 mit Zeitüberwachung, einer Logikeinheit 96 und einer Diagnoseeinheit 97.

Die Komparatoren 90, 91 vergleichen den Absolutwert der Differenzspannung Vdiff2 mit einem oberen Spannungswert Vo1 und einem unteren Spannungswert Vu1 und erzeugen daraus die beiden Logiksignale Vo2, Vu2, die der Logikeinheit 96 zugeführt werden. Ist das Potenzial Vdiff2 größer als Vo1, so hat das Ausgangssignal Vo2 des Komparators 90 einen hohen logischen Pegel. Ist der Wert des Potenzials Vdiff2 kleiner als Vu1, dann weist das Ausgangssignal Vu2 einen niedrigen logischen Pegel auf.

Dem Umschalter 92 werden eingangsseitig die Strommesssignale CS1, CS2 der Strommesseinrichtungen 35, 36 zugeführt. Der Umschalter 92 wird ferner über ein Steuersignal SEL der Logikeinheit 96 angesteuert. Gesteuert von diesem Steuersignal SEL leitet der Umschalter 92 das Strommesssignal CS1 oder das Strommesssignal CS2 den nachgeschalteten Komparatoren 93, 94 zu.

Diese Komparatoren 93, 94 sind als Stromkomparatoren ausgebildet. Der Komparator 93 vergleicht das eingangsseitig eingekoppelte Signal (CS1 oder CS2) mit einem oberen Stromwert Io und erzeugt ausgangsseitig das Stromsignal Imax. Der Komparator 94 vergleicht das eingangsseitig eingekoppelte Signal (CS1 oder CS2) mit einem unteren Stromwert Iu und erzeugt das Stromsignal Imin. Ist das Strommesssignal CS1 bzw. CS2 größer als Io, so hat das Stromsignal Imax einen hohen logischen Pegel. Ist das Strommesssignal CS1 bzw. CS2 kleiner als Iu, so hat das Stromsignal Imin einen niedrigen logischen Pegel. Die Signale Imax, Imin werden in einen den Komparatoren 93, 94 nachgeschalteten PWM-Generator 95 eingekoppelt.

Der PWM-Generator 95 erzeugt an seinem PWM-Ausgang ein Pulsweiten-moduliertes Signal PWMout in Abhängigkeit der Signalpegel der Signale Imax, Imin. Hat das Signal Imax einen hohen logischen Pegel, so liegt am PWM-Ausgang des PWM-Generators 95 ein Signal PWMout mit niedrigem logischen Pegel an. Dies ist das Signal dafür, dass der obere Stromwert Io überschritten wurde und der für den PWM-Betrieb selektierte Transistor 27, 28 ausgeschaltet werden muss. Der Signalpegel PWMout am PWM-Ausgang des PWM-Generators 95 bleibt so lange erhalten, bis der Pegel des Signals Imin von einem hohen logischen Pegel auf einen niedrigen logischen Pegel springt. Dieser Signalwechsel ist das Zeichen dafür, dass der untere Stromwert Iu unterschritten wurde und der für den PWM-Betrieb selektierte Transistor 27, 28 eingeschalten werden muss. Mit dem Pegelwechsel des Signals Imin von dem niedrigen logischen Pegel LOW auf den hohen logischen Pegel HIGH springt somit auch das Signal PWMout am PWM-Ausgang des PWM-Generators 95 wieder auf einen hohen logischen Pegel.

In einer Ausgestaltung weist der PWM-Generator 95 ferner eine Überwachungsschaltung auf, die die Einschaltdauer des Signals am PWM-Ausgang PWMout mit einem oberen Grenzwert vergleicht und bei Überschreiten dieses Grenzwertes ein Signal "Timeout" am Timeout-Ausgang des PWM-Generators 95 erzeugt. Dieses Signal "Timeout" wird in einen entsprechenden Timeout-Eingang der Logikeinheit 96 eingekoppelt.

Die Logikeinheit 96 steuert den weiteren Funktionsablauf der Steuereinheit 36 anhand der beschriebenen Signale sowie basierend auf dem äußeren Signal "On/Off". Die Logikeinheit 96 erkennt anhand der Größe und des Vorzeichens der Differenzspannung Vdiff, ob der Leistungsschalter 27, 28 im Schaltreglerbetrieb betrieben werden muss. Ferner entscheidet die Logikeinheit 96, welcher der beiden Leistungstransistoren 27, 28 als Schaltreglertransistor angesteuert werden soll und welcher vollständig eingeschaltet wird.

In den vorstehenden Ausführungsbeispielen wurde jeweils davon ausgegangen, dass der Leistungstransistor 27 als Schaltregeltransistor betrieben wird und der Leistungstransistor 28 dann als statisch eingeschalteter Transistor fungiert. Ist die Spannungsdifferenz V₁-V₂ negativ, so erfolgt der Betrieb dieser beiden Transistoren 27, 28 umgekehrter Weise.

Die Logikeinheit 96 entscheidet, welches der beiden Strommesssignale CS1, CS2 verwendet werden soll und steuert den Umschalter 92 geeignet an. Die Logikeinheit 96 leitet das am PWM-Ausgang des PWM-Generators 95 abgreifbare Pulsweitenmodulierte Ausgangssignal PWMout über die Steuerausgänge Ctrl1, Ctrl2 an den jeweiligen, als Schaltreglertransistor ausgewählten Leistungstransistor 27, 28 weiter.

Die Logikeinheit 26 erkennt ferner aufgrund der Signale Vu2 beziehungsweise "Timeout", wann die Differenzspannung Vdiff klein genug ist beziehungsweise wann der Ladungsausgleich weit genug fortgeschritten ist, um ein gefahrloses Schließen des Schaltreglers 21 zu erlauben und somit das Transfer-Gate 29 einzuschalten. Anschließend signalisiert die Logikeinheit 96 einer in den Figuren der Zeichnung nicht dargestellten externen Steuereinheit den neuen Schaltzustand durch Pegelwechsel des Ausgangssignals "Switch ON".

Figur 10 zeigt als Bestandteil der Steuereinheit 36 ferner eine Diagnoseeinrichtung 97, die allerdings nicht weiter ausgeführt ist, da hier bekannte Funktionsweisen verwendet werden können. Im Wesentlichen überwacht die Diagnoseeinrichtung 97 eine korrekte Funktion der oben beschriebenen Schaltungsteile und Schaltungselemente sowie den korrekten Funktionsablauf insgesamt. Die Diagnoseeinrichtung 97 kann auch - etwa im Falle eines externen Fehlers, wie dem Kurzschluss an einem der Eingänge 22, 23 - ein Einschalten der erfindungsgemäßen Schaltvorrichtung 20 bzw. der Leistungs-MOSFETs 27, 28 verhindern. Das am Ausgang der Diagnoseeinrichtung 97 anliegende Ausgangssignal DG1 signalisiert einer externen Steuereinheit, ob die Schaltvorrichtung 20 bzw. der im Schaltreglerbetrieb betriebene Leistungs-MOSFET 27, 28 ordnungsgemäß funktioniert. In einer erweiterten, nicht dargestellten Ausführungsform mit bidirektionalem Datenbus ist auch die Kommunikation von Detailinformationen der erfindungsgemäßen Schaltvorrichtung 20 im Fehlerfall möglich, um so eine Reparatur dieser Schaltung zu vereinfachen.

Obgleich die vorliegende Erfindung vorstehend anhand eines konkreten bevorzugten Ausführungsbeispiels sehr detailliert beschrieben wurde, ist sie auf vielfältige Art und Weise veränderbar und modifizierbar.

So sei die Erfindung nicht auf die oben beschriebene, konkrete Schaltungsimplementierung beschränkt. Vielmehr kann das Transfer-Gate, der Schaltregler, die Steuereinheit, die Gate-Steuereinrichtungen, die Strommesseinrichtungen, die Spannungsmesseinrichtung, etc. selbstverständlich in einer Vielzahl unterschiedlicher Schaltungsvarianten ausgebildet sein, ohne vom grundsätzlichen Prinzip der vorliegenden Erfindung abzuweichen.

Gegenstand der Erfindung ist die Bereitstellung eines Leistungsschalters, welcher ein durch einen Schaltregler erweitertes Transfer-Gate aufweist. Als Schaltregler kann hier, wie vorstehend ausgeführt wurde, ein gängiger Abwärtsregler verwendet werden. Zusätzlich oder alternativ wären hier natürlich auch andere Reglertypen, wir zum Beispiel ein Aufwärtsregler, denkbar.

So sei die Erfindung auch nicht auf die konkret verwendeten Bauelemente beschränkt. Vielmehr können beispielsweise durch Vertauschen der Leitfähigkeitstypen N gegen P und umgekehrt beliebig viele weitere Schaltungsbeispiele angegeben werden. Auch müssen nicht notwendigerweise die Transistoren als Bipolar-Transistoren beziehungsweise MOS-Transistoren ausgebildet sein, sondern es lassen sich hier beliebig andere Transistortypen, zum Beispiel JFETs, Thyristoren, IGBTs oder dergleichen einsetzen bzw. diese miteinander verbinden. Es versteht sich, dass die Widerstände, Kondensatoren, Spulen, Dioden durch beliebige resistive Elemente, kapazitive Elemente, induktive Elemente oder gleichrichtende Elemente ersetzt werden können. Darüber hinaus lassen sich die Transistoren durch beliebige gesteuerte Schalter oder verstärkende Elemente ersetzen, je nachdem in welchen Betriebsmodi diese betrieben werden sollen.

Auch sei die Erfindung nicht auf die konkreten Zahlenangaben beschränkt. Diese wurden lediglich dem besseren Verständnis wegen angegeben, sollen jedoch nicht die Erfindung dahingehend beschränken.

## Patentansprüche

1. Schaltvorrichtung zum bidirektionalen Ladungsausgleich zwischen Energiespeichern (6, 7), insbesondere zwischen kapazitiven Energiespeichern (6, 7) in einem Kraftfahrzeug-Bordnetz (1) mit einem integrierten Starter Generator (2),
mit einem ersten Anschluss (22), der mit dem Starter Generator (2) gekoppelt ist,
mit einem zweiten Anschluss (23), der mit einer Energiequelle (6, 7) gekoppelt ist,
mit einem steuerbaren Transfer-Gate (29), das einen zwischen dem ersten und zweiten Anschluss (22, 23) angeordneten, ersten laststromführenden Pfad aufweist, wobei das Transfergate (29) aus einer Parallelschaltung aus jeweils zwei in Reihe geschalteten steuerbaren Leistungsschaltern (T1 bis T6) besteht,
mit einem bidirektional betreibbaren, steuerbaren Schaltregler (21), der einen zwischen dem ersten und zweiten Anschluss (22, 23) und parallel zu dem ersten laststromführenden Pfad angeordneten, zweiten laststromführenden Pfad aufweist.

2. Schaltvorrichtung nach Anspruch 1,
**dadurch gekennzeichnet,**
**dass** der Schaltregler (21) als Abwärtsregler ausgebildet ist.

3. Schaltvorrichtung nach einem der vorstehenden Ansprüche,
**dadurch gekennzeichnet,**
**dass** der Schaltregler (21) zumindest zwei steuerbare erste Schalter (27, 28) aufweist, die bezüglich ihrer gesteuerten Strecken in Reihe angeordnet sind, wobei zwischen einem jeweiligen ersten Lastanschluss (S) der ersten Schalter (27, 28) ein induktiver Energiespeicher (24) angeordnet ist und wobei ein jeweiliger Anschluss des induktiven Energiespeichers (24) über jeweils eine Freilaufdiode (25, 26) mit einem Versorgungsanschluss (39) für ein Versorgungspotenzial (GND) verbunden ist.

4. Schaltvorrichtung nach Anspruch 3,
**dadurch gekennzeichnet,**
**dass** die ersten Schalter (27, 28) als Strommesstransistoren, insbesondere als Sense-MOSFETs, ausgebildet sind.

5. Schaltvorrichtung nach einem der vorstehenden Ansprüche,
**dadurch gekennzeichnet,**
**dass** das Transfer-Gate (29) eine Parallelschaltung aus steuerbaren zweiten Schalter (T1 - T6) enthält, wobei jeweils zwei der zweiten Schalter (T1 - T6) bezüglich ihrer gesteuerten Strecken in Reihe zueinander angeordneten sind und jeweils einen Lastpfad definieren, wobei die Steueranschlüsse (G) der zweiten Schalter (T1 - T6) miteinander verbunden sind, wobei erste Lastanschlüsse (S) der zweiten Schalter (T1 - T6) miteinander verbunden sind und wobei zweite Lastanschlüsse (D) der zweiten Schalter (T1 - T6) entweder mit dem ersten Anschluss (22) oder dem zweiten Anschluss (23) verbunden sind.

6. Schaltvorrichtung nach einem der Ansprüche 3 bis 5,
**dadurch gekennzeichnet,**
**dass** die ersten und/oder die zweiten Schalter (27, 28; T1 - T6) als Leistungsschalter, insbesondere als Leistungs-MOSFETs, insbesondere als n-Kanal Leistungs-MOSFETs, ausgebildet sind.

7. Schaltvorrichtung nach einem der Ansprüche 3 bis 6,
**dadurch gekennzeichnet,**
**dass** die ersten Lastanschlüsse (S) der ersten und/oder der zweiten Schalter (27, 28; T1 - T6) als Sourceanschlüsse (S) und deren zweite Lastanschlüsse (D) als Drainanschlüsse (D) ausgebildet sind.

8. Schaltvorrichtung nach einem der Ansprüche 5 bis 7,
**dadurch gekennzeichnet,**
**dass** das Transfer-Gate (29) eine Gateschutzschaltung (40) aufweist, welche zwischen den Steueranschlüssen (G) und den ersten Lastanschlüssen (S) der zweiten Schalter (T1 - T6) angeordnet ist und welche die Steueranschlüsse (G) der zweiten Schalter (T1 - T6) vor einer Überspannung schützt.

9. Schaltvorrichtung nach einem der Ansprüche 5 bis 8,
**dadurch gekennzeichnet,**
**dass** das Transfer-Gate (29) eine Abschaltvorrichtung (43) aufweist, welche zum Ausschalten des Transfer-Gates (29) die Steueranschlüsse (G) und die ersten Lastanschlüsse (S) der zweiten Schalter (T1 - T6) kurzschließt und damit die zweiten Schalter (T1 - T6) ausschaltet.

10. Schaltvorrichtung nach einem der Ansprüche 5 bis 9,
**dadurch gekennzeichnet,**
**dass** zur Ansteuerung der zweiten Schalter (T1 - T6) ein schaltbarer Oszillator (42), insbesondere eine Schmitt-Trigger-Schaltung (42), vorgesehen ist, dem eine Ladungspumpe (41) nachgeschaltet ist, welche die Steueranschlüsse (G) der zweiten Schalter (T1 - T6) mit einem Steuersignal ansteuert.

11. Schaltvorrichtung nach einem der Ansprüche 5 bis 10,
**dadurch gekennzeichnet,**
**dass** zumindest eine Strommesseinrichtung (35, 36) vorgesehen ist, welche mit zumindest einem der ersten Schalter (27, 28) verbunden ist, welche ein vom Strom (I1) durch den Lastpfad des jeweiligen ersten Schalters (27, 28) abgeleitetes Signal (KS11, KS22; CS11, CS22) abgreift und welche abhängig davon ein Strommesssignal (CS1, CS2) am Ausgang der Strommesseinrichtung (35, 36) bereitstellt.

12. Schaltvorrichtung nach einem der vorstehenden Ansprüche,
**dadurch gekennzeichnet,**
**dass** eine Ablaufsteuerschaltung (36) vorgesehen ist, welche die Funktion des Schaltreglers (21) und des Transfer-Gates (29) steuert.

13. Schaltvorrichtung nach Anspruch 12,
**dadurch gekennzeichnet,**
**dass** zumindest eine Gatesteuerschaltung (30, 31) vorgesehen ist, die eingangsseitig mit der Ablaufsteuerschaltung (36) verbunden ist und die abhängig von einem Steuersignal (Ctrl1, Ctrl2) der Ablaufsteuerschaltung (36) den Steueranschluss (S) zumindest eines ersten Schalters (27, 28) ansteuert.

14. Schaltvorrichtung nach Anspruch 13,
**dadurch gekennzeichnet,**
**dass** zumindest eine Hilfsspannungsquelle (32, 33) vorgesehen ist, welche eingangsseitig mit einem jeweiligen ersten oder einem zweiten Anschluss (22, 23) verbunden ist, welche zwischen einem ersten Versorgungsanschluss (39) mit einem ersten Versorgungspotenzial (GND) und einem zweiten Versorgungsanschluss mit einem zweiten Versorgungspotenzial (5V) angeordnet ist und welche ein Hilfsversorgungspotenzial (Vaux1, Vaux2) zur Versorgung der Gatesteuerschaltung (30, 31) bereitstellt.

15. Schaltvorrichtung nach einem der vorstehenden Ansprüche,
**dadurch gekennzeichnet,**
**dass** eine Spannungsmesseinrichtung (37) vorgesehen ist, die eingangsseitig mit dem ersten und dem zweiten Anschluss (22, 23) gekoppelt ist, die eine zwischen den Anschlüssen (22, 23) anliegende Differenzspannung (Vdiff) misst und die ein davon abgeleitetes Signal (Vdiff1, Vdiff2) ausgangsseitig bereitstellt.

16. Schaltvorrichtung nach Anspruch 15,
**dadurch gekennzeichnet,**
**dass** die Spannungsmesseinrichtung (37) einen ersten Ausgang (83) aufweist, an dem ein vom Betrag der gemessenen Differenzspannung (Vdiff) abgeleitetes Signal (Vdiff2) abgreifbar ist, und die einen zweiten Ausgang (84) aufweist, an dem ein vom Vorzeichen der gemessenen Differenzspannung (Vdiff) abgeleitetes Signal (Vdiff1) abgreifbar ist.

17. Schaltvorrichtung nach einem der Ansprüche 15 oder 16,
**dadurch gekennzeichnet,**
**dass** die Spannungsmesseinrichtung (37) eingangsseitig einen Differenzverstärker (80) aufweist, der eine hohe Gleichtaktunterdrückung aufweist, dem eingangsseitig die Differenzspannung (Vdiff) eingekoppelt wird, dem eine Komparator (81) nachgeschaltet ist, der das Ausgangssignal des Differenzverstärkers (80) mit einem Referenzpotential (Vref) vergleicht.

18. Schaltvorrichtung nach einem der Ansprüche 11 bis 17,
**dadurch gekennzeichnet,**
**dass** die Ablaufsteuerschaltung (36) eingangsseitig mit Ausgangsanschlüssen (83, 84) der Spannungsmesseinrichtung (37) und/oder der Strommesseinrichtung (35, 36) verbunden ist und eine Auswertung der gemessenen Ströme und Spannungen vornimmt.

19. Schaltvorrichtung nach einem der vorstehenden Ansprüche,
**dadurch gekennzeichnet,**
**dass** die Schaltvorrichtung (20) als integrierte Schaltvorrichtung (20) ausgebildet ist.

20. Kraftfahrzeug-Bordnetz (1)
mit zumindest zwei Energiespeichern (6, 7),
mit einem integrierten Starter Generator (2), der mechanisch mit einer Brennkraftmaschine (3) gekoppelt ist, der in einem generatorischen Betrieb zumindest einen Energiespeicher (6, 7) auflädt und der in einem motorischen Betrieb mittels der in zumindest einem Energiespeicher (6, 7) gespeicherten Energie antreibbar ist,
mit einem zwischen den Energiespeichern (6, 7) einerseits und dem integrierten Starter Generator (2) andererseits angeordneten, bidirektional betreibbaren AC/DC-Wandler (4),
mit zumindest einer Schaltvorrichtung (20) nach einem der vorstehenden Ansprüche, die zwischen einem DC-Anschluss des AC/DC-Wandler (4) und jeweils zumindest einem der Energiespeicher angeordnet ist.

21. Kraftfahrzeug-Bordnetz nach Anspruch 20,
**dadurch gekennzeichnet,**
**dass** die Energiespeicher (6, 7) im Betrieb physikalisch voneinander getrennt sind.

22. Kraftfahrzeug-Bordnetz nach einem der Ansprüche 20 oder 21,
**dadurch gekennzeichnet,**
**dass** zur physikalischen Trennung der Energiespeicher (6, 7) zumindest eine Schaltvorrichtung (9, 10, 20) vorgesehen ist.

23. Kraftfahrzeug-Bordnetz nach einem der Ansprüche 20 - 22,
**dadurch gekennzeichnet,**
**dass** ein erster Energiespeicher (7) als Akkumulator (7) und ein zweiter Energiespeicher (6) als Doppelschichtkondensator (6) ausgebildet ist.

24. Kraftfahrzeug-Bordnetz nach einem der Ansprüche 20 - 23,
**dadurch gekennzeichnet,**
**dass** die Schaltvorrichtung (20) zwischen dem Doppelschichtkondensator (6) und dem DC-Anschluss des AC/DC-Wandlers (4) angeordnet ist.

25. Kraftfahrzeug-Bordnetz nach einem der Ansprüche 20 - 24,
**dadurch gekennzeichnet,**
**dass** zwischen dem DC-Anschluss des AC/DC-Wandlers (4) und der zumindest einen Schaltvorrichtung (20) ein Zwischenkreiskondensator (5) zur Pufferung einer geschalteten Spannung vorgesehen ist.

26. Verfahren zum Betreiben einer Schaltvorrichtung (20) nach einem der Ansprüche 1 bis 19,
mit den folgenden Verfahrensschritten:
(a) zunächst sind der Schaltregler (21) und das Transfer-Gate (29) geöffnet;
(b) ein erstes Potenzial (V1) an einem Eingang (22 der Schaltvorrichtung (20) ist größer als ein zweites Potenzial (V2) an einem Ausgang (23) der Schaltvorrichtung (20);
(b) zum Schließen der Schaltvorrichtung (20) wird diese mit einem ersten Steuersignal (On/Off) beaufschlagt;
(d) zur Reduzierung der über der Schaltvorrichtung (20) abfallenden Differenzspannung (Vdiff) wird der Schaltregler (21) zunächst in einem Schaltreglerbetrieb betrieben;
(e) ist die Differenzspannung (Vdiff) weitgehend ausgeglichen, dann wird der Schaltregler (21) vollständig geschlossen ist und das Transfer-Gate (29) wird eingeschaltet.

27. Verfahren nach Anspruch 26,
**dadurch gekennzeichnet,**
**dass** die Differenzspannung (Vdiff) gemessen und ausgewertet wird.

28. Verfahren nach einem der Ansprüche 26 oder 27,
**dadurch gekennzeichnet,**
**dass** anhand der gemessenen Differenzspannung (Vdiff) ein erstes Spannungsmesssignal (Vdiff2) als Maß für den Betrag der Differenzspannung (Vdiff) und ein zweites Spannungsmesssignal (Vdiff1) als Maß für die Polarität der Differenzspannung (Vdiff) erzeugt wird.

29. Verfahren nach einem der Ansprüche 26 - 28,
**dadurch gekennzeichnet,**
**dass** ein Ladungsausgleich zwischen dem Ausgang (23) und dem Eingang (22) durch Betreiben des Schaltreglers (22) im Schaltreglerbetrieb vorgenommen wird, sofern das erste Spannungsmesssignal (Vdiff2) eine Spannungsdifferenz (Vdiff2), die größer als ein oberer Schwellenwert ist, aufweist.

30. Verfahren nach einem der Ansprüche 26 - 29,
**dadurch gekennzeichnet,**
**dass** der mit dem Eingang (22) gekoppelte Transistor (27) als Schaltreglertransistor (27) selektiert wird und der mit dem Ausgang (23) gekoppelte Transistor (28) statisch eingeschaltet betrieben wird, wenn das zweite Spannungsmesssignal (Vdiff1) eine positive Polarität der Differenzspannung (Vdiff) anzeigt.

31. Verfahren nach einem der Ansprüche 26 - 30,
**dadurch gekennzeichnet,**
**dass** im Schaltreglerbetrieb die Verfahrensschritte (aa) bis (ee) iterativ durchgeführt werden:
(aa) ein Laststrom (I1) durch die gesteuerte Strecke des mit dem Eingang (22) verbundenen Transistors (27) und durch die Induktivität (24) wird gemessen;
(bb) der gemessene Laststrom (I1) wird gegen einen oberen Grenzwert (Io) hin überwacht;
(cc) der Transistor (27) wird abgeschaltet, sofern der Laststrom (I1) den oberen Grenzwert (Io) übersteigt;
(dd) der gemessene Laststrom (I1) wird gegen einen unteren Grenzwert (Iu) überwacht;
(ee) der Transistor (27) wird wieder eingeschaltet, sofern der Laststrom (I1) den unter Grenzwert (Iu) unterschreitet.

32. Verfahren nach einem der Ansprüche 26 - 31,
**dadurch gekennzeichnet,**
**dass** der mit dem Eingang verbundene Transistor (27) des Schaltreglers (21) dauerhaft eingeschaltet wird und/oder das parallel zum Schaltregler (21) angeordnete Transfer-Gate (29) eingeschaltet wird, sofern das erste Spannungsmesssignal (Vdiff2) eine Spannungsdifferenz (Vdiff2), die kleiner als ein unterer Schwellenwert ist, aufweist.

33. Verfahren nach einem der Ansprüche 26 - 32,
**dadurch gekennzeichnet,**
**dass** der mit dem Eingang verbundene Transistor (27) des Schaltreglers (21) dauerhaft eingeschaltet wird und/oder das parallel zum Schaltregler (21) angeordnete Transfer-Gate (29) eingeschaltet wird, sofern eine Ladezeit der Induktivität (24) des Schaltreglers (21) im Schaltreglerbetrieb einen vorgegebenen zeitlichen Grenzwert überschreitet.

34. Verfahren nach einem der Ansprüche 26 - 33,
**dadurch gekennzeichnet,**
**dass** anhand der gemessenen Differenzspannung (Vdiff) erkannt wird, wann die Differenzspannung (Vdiff) klein genug ist beziehungsweise wann der Ladungsausgleich zwischen Ausgang (23) und Eingang (22) weit genug fortgeschritten ist, um ein dauerhaftes Schließen des Schaltreglers (21) vorzunehmen und um das Transfer-Gate (29) einzuschalten.

35. Verfahren nach einem der Ansprüche 26 - 34,
**dadurch gekennzeichnet,**
**dass** die Schaltungsteile der Schalteinrichtung (20) auf ihre korrekte Funktion hin und/oder auf Fehler im Funktionsablauf hin überwacht werden und dass im Falle eines detektierten Fehlers ein Einschalten der Schaltvorrichtung (20) nicht vorgenommen wird.

36. Verfahren nach einem der Ansprüche 26 - 35,
**dadurch gekennzeichnet,**
**dass** der jeweils aktuelle Schaltzustand der Schaltereinrichtung (20) mittels eines Statussignals an eine externe Steuereinheit übermittelt wird und dort angezeigt wird.

## Claims

1. Switching device for bidirectionally equalising charge between energy accumulators (6, 7), especially between capacitive energy accumulators (6, 7) in a motor vehicle electrical system (1) with integrated starter-generator (2),
with a first terminal (22) which is coupled to the startergenerator (2),
with a second terminal (23), which is coupled to an energy source (6, 7),
with a controllable transfer gate (29) which features a first load current carrying path arranged between the first and second terminal (22, 23), with the transfer gate (29) consisting of a parallel circuit of two series-connected controllable power transistors (T1 to T6),
with a controllable switching controller (21) able to be operated bidirectionally which features a second load current carrying path, arranged between the first and second terminal (22, 23) and parallel to the first load current carrying path.

2. Switching device in accordance with claim 1,
**characterised in that**
the switching controller (21) is embodied as a downward controller.

3. Switching device in accordance with one of the previous claims,
**characterised in that**
the switching controller (21) features at least two controllable first switches (27, 28), which with regard to their controlled links, are arranged in series, with an inductive energy accumulator (24) being arranged between a relevant first load connection (S) of the first switch (27, 28) and being connected in each case to a relevant terminal of the inductive energy accumulator (24) via a free-wheeling diode (25, 26) to a supply connection (39) for a supply potential (GND).

4. Switching device in accordance with claim 3,
**characterised in that**
the first switches (27, 28) are embodied as current-sensing transistors, especially as sense MOSFETs.

5. Switching device in accordance with one of the previous claims,
**characterised in that**
the transfer gate (29) contains a parallel circuit comprising controllable second switches (T1 - T6), with two of the second switches (T1 - T6) in each case, as regards their controlled links, being arranged in series and defining a load path in each case, with the control terminals (G) of the second switch (T1 - T6) being connected to each other with first load connections (S) of the second switch (T1 - T6) being connected to each other and with second load connections (D) of the second switches (T1 - T6) being connected either to the first terminal (22) or the second terminal (23).

6. Switching device in accordance with one of the claims 3 to 5,
**characterised in that**
the first and/or the second switches (27, 28; T1 - T6) are embodied as power switches, especially as power MOSFETs, especially as n-channel power MOSFETs.

7. Switching device in accordance with one of the claims 3 to 6,
**characterised in that**
the first load terminals (S) of the first and/or the second switches (27, 28; T1 - T6) are embodied as source terminals (S) and their second load terminals (D) as drain terminals (D).

8. Switching device in accordance with one of the claims 5 to 7,
**characterised in that**
the transfer gate (29) features a gate protection circuit (40), which is arranged between the control terminals (G) and the first load terminals (S) of the second switches (T1 - T6) and which protects the control terminals (G) of the second switches (T1 - T6) from an overvoltage.

9. Switching device in accordance with one of the claims 5 to 8,
**characterised in that**
the transfer gate (29) features a switch-off device (43), which, to switch off the transfer gate (29) short circuits the control terminals (G) and the first load terminals (S) of the second switches (T1 - T6) and thus switches off the second switches (T1 - T6).

10. Switching device in accordance with one of the claims 5 to 9,
**characterised in that**
for activation of the second switches (T1 - T6) a switchable oscillator (42), especially a Schmitt trigger circuit (42), is provided, downstream of which a charge pump (41) is connected which activates the control terminals (G) of the second switches (T1 - T6) with a control signal.

11. Switching device in accordance with one of the claims 5 to 10,
**characterised in that**
at least one current sensing device (35, 36) is provided, which is connected to at least one of the first switches (27, 28) which taps off a signal (KS11, KS22; CS11, CS22) derived from the current (T1) through the load path of the relevant first switch (27, 28) and which, as s function of this, provides a current sensing signal (CS1 CS2) at the output of the current sensing device (35, 36).

12. Switching device in accordance with one of the previous claims,
**characterised in that**
a scheduling circuit is provided (36) which controls the function of the switching controller (21) and of the transfer gate (29).

13. Switching device in accordance with claim 12,
**characterised in that**
at least one gate control circuit (30, 31) is provided, which is connected on the input side to the scheduler circuit (36) and which, depending on a control signal (Ctrl1, Ctrl2) of the scheduler circuit (2) activates the control connection (S) of at least a first switch (2, 36).

14. Switching device in accordance with claim 13,
**characterised in that**
at least one auxiliary voltage source (32, 33) is provided, which is connected on the input side to a relevant first or second terminal (22, 23), which is arranged between a first supply connection (39) with a first supply potential (GND) and a second supply connection with an second supply potential (5V) and which provides an auxiliary supply potential (Vaux1, Vaux2) for supplying the gate control circuit (30, 31).

15. Switching device in accordance with one of the previous claims,
**characterised in that**
a voltage sensing device (37) is provided, which is coupled on the input side to the first and the second terminal (22, 23), which senses a differential voltage (Vdiff) present between the terminals (22, 23) and provides a signal (Vdiff1, Vdiff2) derived from this on the output side.

16. Switching device in accordance with claim 15,
**characterised in that**
the voltage measurement device (37) features a first output (83) at which a signal (Vdiff2) derived from the amount of the measured differential voltage (Vdiff) can be tapped off, and which features a second output (84) at which a signal (Vdiff1) which can be derived from the leading sign of the measured differential voltage (Vdiff) can be tapped off.

17. Switching device in accordance with one of the claims 15 or 16,
**characterised in that**
the voltage sensing device (37) features a differential amplifier (80) on the input side which has a high common-mode rejection, to which the differential voltage (Vdiff) is coupled in on the input side, downstream of which a comparator (81) is connected which compares the output signal of the differential amplifier (80) with a reference potential (Vref).

18. Switching device in accordance with one of the claims 11 to 17,
**characterised in that**
The scheduler circuit (36) is connected on the input side to the output terminals (83, 84) of the voltage measurement device (37) and/or the current sensing device (35, 36) and evaluates the measured currents and voltages.

19. Switching device in accordance with one of the previous claims,
**characterised in that**
the switching device (20) is embodied as an integrated switching device (20).

20. Motor vehicle electrical network (1)
with at least two energy accumulators (6, 7),
with an integrated starter-generator (2), which is coupled mechanically to an internal combustion engine (3) which in a generator mode charges at least one energy accumulator (6, 7) and which in a motor mode can be driven by means of the energy stored in at least one energy accumulator (6, 7),
with a bidirectionally operable AC/DC converter (4) arranged between the energy accumulators (6, 7) on the one side and the integrated starter-generator (2) on the other side,
with at least one switching device (20) in accordance with one of the previous claims which is arranged between a DC terminal of the AC/DC converter (4) and at least one of the energy accumulators in each case.

21. Motor vehicle electrical system in accordance with claim 20,
**characterised in that**
the energy accumulators (6, 7) are physically separated from one another in operation.

22. Motor vehicle electrical system in accordance with one of the claims 20 or 21,
**characterised in that**
at least one switching device (20, 20, 20) is provided for physical separation of the energy accumulators (6, 10).

23. Motor vehicle-vehicle electrical system in accordance with one of the claims 20 - 22
**characterised in that**
a first energy accumulator (7) is embodied as an accumulator (7) and a second energy accumulator (6) as a double-layer capacitor (6).

24. Motor vehicle electrical system in accordance with one of the claims 20 - 23,
**characterised in that**
the switching device (20) is arranged between the double-layer capacitor (6) and the DC terminal of the AC/DC converter (4).

25. Motor vehicle-vehicle electrical system in accordance with one of the claims 20 - 24
**characterised in that**
an intermediate circuit capacitor (5) for buffering a switched voltage is provided between the DC terminal of the AC/DC converter (4) and the at least one switching device (20).

26. Method for operating a switching device (20) in accordance with one of the claims 1 to 19,
with the following steps:
(a) first the switching controller (21) and the transfer gate (29) are opened;
(b) a first potential (V1) at an input (22) of the switching device (20) is greater than a second potential (V2) at an output (23) of the switching device
(c) to close the switching device (20) a first control signal (On/Off) is applied to the device;
(d) to reduce the differential voltage (Vdiff) falling via the switching device (20) the switching controller (21) is first operated in a switching controller mode;
(e) if the differential voltage (Vdiff) is largely balanced out, then the switching controller (21) is completely closed and the transfer gate (29) is switched on.

27. Method in accordance with claim 26,
**characterised in that**
the differential voltage (Vdiff) is measured and evaluated.

28. Method in accordance with one of the Claims 26 or 27,
**characterised in that**,
on the basis of the measured differential voltage (Vdiff) a first voltage sensing signal (Vdiff2) as a measure of the amount of the differential voltage (Vdiff) and a second voltage sensing signal (Vdiff1) is created as a measure for the polarity of the differential voltage (Vdiff).

29. Method in accordance with one of the Claims 26-28,
**characterised in that**
charge equalisation between the output (23) and the input (22) is undertaken by operating the switching controller (22) in switching controller mode, provided the first voltage measurement signal (Vdiff2) exhibits a voltage difference (Vdiff2), which is greater than an upper threshold value.

30. Method in accordance with one of the claims 26 - 29,
**characterised in that**
the transistor (27) coupled to the input (22) is selected as the switching controller transistor (27) and the transistor (28) coupled with the output (23) is operated as statically switched on if the second voltage sensing signal (Vdiff1) displays a positive polarity of the differential voltage (Vdiff).

31. Method in accordance with one of the claims 26 - 30,
**characterised in that**
the steps (aa) to (ee) are performed iteratively in switching controller mode:
(aa) a load current (I1) through the controlled link of the transistor (27) connected to the input (22) and through the inductor (24) is measured;
(bb) the measured load current (I1) is monitored against an upper limit value (Io);
(cc) the transistor (27) is switched off provided the load current (I1) has exceeded the upper limit value (Io);
(dd) the measured load current (I1) is monitored against a lower limit value (Iu);
(ee) the transistor (27) will be switched back on if the charge current (I1) drops below the limit value (Iu).

32. Method in accordance with one of the claims 26 - 31,
**characterised in that**
the transistor (27) of the switching controller (21) connected to the input is permanently switched on and/or that the transfer gate (29) connected in parallel to the switching controller (21) is switched on provided the first voltage measurement signal (Vdiff2) exhibits a voltage difference (Vdiff2) which is less than a lower threshold value.

33. Method in accordance with one of the claims 26 - 32,
**characterised in that**
the transistor (27) of the switching controller (21) connected to the input is permanently switched on and/or that the transfer gate (29) connected in parallel to the switching controller (21) is switched on provided the charge time of the inductor (24) of the switching controller (21) falls below a predetermined time limit value in switching controller mode.

34. Method in accordance with one of the claims 26 - 33,
**characterised in that**
on the basis of the measured differential voltage (Vdiff) the device detects when the differential voltage (Vdiff) is small enough or when the charge equalisation between output (23) and input (22) has progressed far enough respectively to perform a permanent closure of the switching controller (21) and switch over to the transfer gate (29).

35. Method in accordance with one of the claims 26 - 34,
**characterised in that**
the circuit parts of the switching device (20) are monitored for their correct function and/or there is monitoring for errors in the functional sequence, and that, in the event of a detected error, the switching device (20) is not switched on.

36. Method in accordance with one of the claims 26 - 35,
**characterised in that**
the current switching state of the switching device is transferred in each case (20) by means of a status signal to an external control unit and is displayed there.

## Revendications

1. Dispositif de commutation pour la compensation de charge bidirectionnelle entre des accumulateurs d'énergie (6, 7), en particulier entre des accumulateurs d'énergie capacitifs (6, 7) dans un réseau de bord (1) de véhicule automobile avec un générateur démarreur intégré (2),
comprenant une première connexion (22) couplée au générateur démarreur (2),
comprenant une deuxième connexion (23) couplée à une source de courant (6, 7),
comprenant une porte de transfert (29) commandable, comportant un premier chemin conducteur de courant de charge disposé entre la première et la deuxième connexion (22, 23), ladite porte de transfert (29) se composant d'un couplage en parallèle de deux sectionneurs de puissance (T1 - T6) commandables montés en série,
comprenant un régulateur de commutation (21) commandable, bidirectionnellement fonctionnel, comportant un deuxième chemin conducteur de courant de charge disposé entre la première et la deuxième connexion (22, 23) et parallèle au premier chemin conducteur de courant de charge.

2. Dispositif de commutation selon la revendication 1,
**caractérisé**
**en ce que** le régulateur de commutation (21) est réalisé en tant que convertisseur Buck.

3. Dispositif de commutation selon l'une des revendications précédentes,
**caractérisé**
**en ce que** le régulateur de commutation (21) comporte au moins deux premiers commutateurs (27, 28) commandables, disposés en série relativement à leurs lignes commandables, un accumulateur d'énergie inductif (24) étant disposé entre une première connexion de charge (S) des premiers commutateurs (27, 28), et une connexion de l'accumulateur d'énergie inductif (24) étant reliée par une diode de récupération de self-induction (25, 26) à une connexion d'alimentation (39) pour un potentiel d'alimentation (GND).

4. Dispositif de commutation selon la revendication 3,
**caractérisé**
**en ce que** les premiers commutateurs (27, 28) sont réalisés en tant que transistors de mesure de courant, en particulier en tant que transistors MOSFET à détecteur.

5. Dispositif de commutation selon l'une des revendications précédentes,
**caractérisé**
**en ce que** la porte de transfert (29) comprend un couplage en parallèle de deuxièmes commutateurs (T1 - T6) commandables, deux commutateurs parmi les deuxièmes commutateurs (T1 - T6) étant disposés en série relativement à leurs lignes commandées et définissant un chemin de charge, les connexions de commande (G) des deuxièmes commutateurs (T1 - T6) étant reliées entre elles, de premières connexions de charge (S) des deuxièmes commutateurs (T1 - T6) étant reliées entre elles et de deuxièmes connexions de charge (D) des deuxièmes commutateurs (T1 - T6) étant reliées soit à la première connexion (22), soit à la deuxième connexion (23).

6. Dispositif de commutation selon l'une des revendications 3 à 5,
**caractérisé**
**en ce que** les premiers et/ou les deuxièmes commutateurs (27, 28 ; T1 - T6) sont réalisés en tant que sectionneurs de puissance, en particulier en tant que MOSFET de puissance, notamment en tant que MOSFET de puissance à canal N.

7. Dispositif de commutation selon l'une des revendications 3 à 6,
**caractérisé**
**en ce que** les premières connexions de charge (S) des premiers et/ou des deuxièmes commutateurs (27, 28 ; T1 - T6) sont réalisées en tant que connexions de sortie de la source (S), et leurs deuxièmes connexions de charge (D) en tant que sorties de drain (D).

8. Dispositif de commutation selon l'une des revendications 5 à 7,
**caractérisé**
**en ce que** la porte de transfert (29) comporte un circuit de protection de porte (40) disposé entre les connexions de commande (G) et les premières connexions de charge (S) des deuxièmes commutateurs (T1 - T6) et qui protège les connexions de commande (G) des deuxièmes commutateurs (T1 - T6) contre une surtension.

9. Dispositif de commutation selon l'une des revendications 5 à 8,
**caractérisé**
**en ce que** la porte de transfert (29) comporte un dispositif de déconnexion (43) court-circuitant les connexions de commande (G) et les premières connexions de charge (S) des deuxièmes commutateurs (T1 - T6) pour la déconnexion de la porte de transfert (29), et déconnecte ainsi les deuxièmes commutateurs (T1 - T6).

10. Dispositif de commutation selon l'une des revendications 5 à 9,
**caractérisé**
**en ce que** pour la commande des deuxièmes commutateurs (T1 - T6) est prévu un oscillateur commutable (42), en particulier un circuit à déclencheur de Schmitt (42), en aval duquel est disposée une pompe de charge (41) excitant les connexions de commande (G) des deuxièmes commutateurs (T1 - T6) au moyen d'un signal de commande.

11. Dispositif de commutation selon l'une des revendications 5 à 10,
**caractérisé**
**en ce qu'**au moins un dispositif de mesure de courant (35, 36) est prévu, relié à au moins un des premiers commutateurs (27, 28), saisissant un signal (KS11, KS22 ; CS11, CS22) dérivé du courant (I1) par le chemin de charge du premier commutateur (27, 28) correspondant, et qui délivre en conséquence un signal de mesure de courant (CS1, CS2) à la sortie du dispositif de mesure de courant (35, 36).

12. Dispositif de commutation selon l'une des revendications précédentes,
**caractérisé**
**en ce qu'**un circuit de commande d'exécution (36) est prévu, lequel commande le fonctionnement du régulateur de commutation (21) et de la porte de transfert (29).

13. Dispositif de commutation selon la revendication 12,
**caractérisé**
**en ce qu'**au moins un circuit de commande de porte (30, 31) est prévu, relié au circuit de commande d'exécution (36) côté entrée et commandant la connexion de commande (S) d'au moins un premier commutateur (27, 28) en fonction d'un signal de commande (Ctrl1, Ctrl2) du circuit de commande d'exécution (36).

14. Dispositif de commutation selon la revendication 13,
**caractérisé**
**en ce qu'**au moins une source de tension auxiliaire (32, 33) est prévue, reliée à une première ou à une deuxième connexion (22, 23) côté entrée, disposée entre une première connexion d'alimentation (39) avec un premier potentiel d'alimentation (GND) et une deuxième connexion d'alimentation avec un deuxième potentiel d'alimentation (5V), et délivrant un potentiel d'alimentation auxiliaire (Vaux1, Vaux2) pour l'alimentation du circuit de commande de porte (30, 31).

15. Dispositif de commutation selon l'une des revendications précédentes,
**caractérisé**
**en ce qu'**un dispositif de mesure de tension (37) est prévu, couplé à la première et à la deuxième connexion (22, 23) côté entrée, mesurant une tension différentielle (Vdiff) appliquée entre les connexions (22, 23), et délivrant un signal dérivé de celle-ci (Vdiff1, Vdiff2) côté sortie.

16. Dispositif de commutation selon la revendication 15,
**caractérisé**
**en ce que** le dispositif de mesure de tension (37) présente une première sortie (83) sur laquelle peut être saisi un signal (Vdiff2) dérivé de la valeur de la tension différentielle (Vdiff), et une deuxième sortie (84) sur laquelle peut être saisi un signal (Vdiff1) dérivé du signe de la tension différentielle (Vdiff) mesurée.

17. Dispositif de commutation selon l'une des revendications 15 ou 16,
**caractérisé**
**en ce que** le dispositif de mesure de tension (37) comporte un amplificateur différentiel (80) côté entrée, présentant une réjection élevée en mode commun, auquel est couplée la tension différentielle (Vdiff) côté entrée, qui est suivi d'un comparateur (81), lequel compare le signal de sortie de l'amplificateur différentiel (80) avec un potentiel de référence (Vref).

18. Dispositif de commutation selon l'une des revendications 11 à 17,
**caractérisé**
**en ce que** le circuit de commande d'exécution (36) est relié côté entrée à des connexions de sortie (83, 84) du dispositif de mesure de tension (37) et/ou du dispositif de mesure de courant (35, 36), et procède à une analyse des courants et des tensions mesurés.

19. Dispositif de commutation selon l'une des revendications précédentes,
**caractérisé**
**en ce que** le dispositif de commutation (20) est réalisé en tant que dispositif de commutation (20) intégré.

20. Réseau de bord de véhicule automobile (1),
comprenant au moins deux accumulateurs d'énergie (6, 7),
comprenant un générateur démarreur intégré (2), mécaniquement couplé à un moteur à combustion interne (3), qui en mode générateur charge au moins un accumulateur d'énergie (6, 7), et est entraînable en mode moteur au moyen du courant accumulé dans le ou les accumulateurs d'énergie (6, 7),
comprenant un transformateur CA/CC (4), bidirectionnellement fonctionnel, disposé entre les accumulateurs d'énergie (6, 7), d'une part, et le générateur démarreur intégré (2), d'autre part,
comprenant au moins un dispositif de commutation (20) selon l'une des revendications précédentes, disposé entre une connexion CC du transformateur CA/CC (4) et au moins un des accumulateurs d'énergie.

21. Réseau de bord de véhicule automobile selon la revendication 20,
**caractérisé**
**en ce que** les accumulateurs d'énergie (6, 7) sont physiquement séparés l'un de l'autre en service.

22. Réseau de bord de véhicule automobile selon l'une des revendications 20 ou 21,
**caractérisé**
**en ce qu'**au moins un dispositif de commutation (9, 10, 20) est prévu pour la séparation physique des accumulateurs d'énergie (6, 7).

23. Réseau de bord de véhicule automobile selon l'une des revendications 20 à 22,
**caractérisé**
**en ce qu'**un premier accumulateur d'énergie (7) est réalisé en tant qu'accumulateur (7), et un deuxième accumulateur d'énergie (6) en tant que condensateur à double couche (6).

24. Réseau de bord de véhicule automobile selon l'une des revendications 20 à 23,
**caractérisé**
**en ce que** le dispositif de commutation (20) est disposé entre le condensateur à double couche (6) et la connexion CC du transformateur CA/CC (4).

25. Réseau de bord de véhicule automobile selon l'une des revendications 20 à 24,
**caractérisé**
**en ce qu'**un condensateur de circuit intermédiaire (5) est prévu entre la connexion CC du transformateur CA/CC (4) et le ou les dispositifs de commutation (20) pour le stockage-tampon d'une tension commutée.

26. Procédé pour la mise en service d'un dispositif de commutation (20) selon l'une des revendications 1 à 19,
comprenant les étapes suivantes :
(a) le régulateur de commutation (21) et la porte de transfert (29) sont d'abord ouverts ;
(b) un premier potentiel (V1) à une entrée (22) du dispositif de commutation (20) est supérieur à un deuxième potentiel (V2) à une sortie (23) du dispositif de commutation (20) ;
(c) pour la fermeture du dispositif de commutation (20), celui-ci reçoit un premier signal de commande (On/Off) ;
(d) pour la réduction de la tension différentielle (Vdiff) appliquée par le dispositif de commutation (20), le régulateur de commutation (21) est d'abord mis en service dans un mode de régulation de commutation ;
(e) une fois la tension différentielle (Vdiff) pratiquement égalisée, le régulateur de commutation (21) est entièrement fermé et la porte de transfert (29) est connectée.

27. Procédé selon la revendication 26,
**caractérisé**
**en ce que** la tension différentielle (Vdiff) est mesurée et analysée.

28. Procédé selon l'une des revendications 26 ou 27,
**caractérisé**
**en ce qu'**à partir de la tension différentielle (Vdiff) mesurée, un premier signal de mesure de tension (Vdiff2) est généré comme indication pour la valeur de la tension différentielle (Vdiff), et un deuxième signal de mesure de tension (Vdiff1) comme indication pour la polarité de la tension différentielle (Vdiff).

29. Procédé selon l'une des revendications 26 à 28,
**caractérisé**
**en ce qu'**il est procédé à une égalisation de charge entre la sortie (23) et l'entrée (22) par mise en service du régulateur de commutation (22) en mode de régulation de commutation, si le premier signal de mesure de tension (Vdiff2) présente un différentiel de tension (Vdiff2) supérieur à une valeur seuil supérieure.

30. Procédé selon l'une des revendications 26 à 29,
**caractérisé**
**en ce que** le transistor (27) couplé à l'entrée (22) est sélectionné en tant que transistor de régulateur de commutation (27), et en ce que le transistor (28) couplé à la sortie (23) est mis en service avec connexion statique, si le deuxième signal de mesure de tension (Vdiff1) indique une polarité positive pour la tension différentielle (Vdiff).

31. Procédé selon l'une des revendications 26 à 30,
**caractérisé**
**en ce que** les étapes (aa) à (ee) sont itérativement exécutées en mode de régulation de commutation :
(aa) un courant de charge (I1) est mesuré par la ligne commandée du transistor (27) relié à l'entrée (22) et par l'inductance (24) ;
(bb) le courant de charge (I1) mesuré est surveillé par rapport à une valeur limite supérieure (Io) ;
(cc) le transistor (27) est déconnecté, si le courant de charge (I1) dépasse la valeur limite supérieure (Io) ;
(dd) le courant de charge (I1) mesuré est surveillé par rapport à une valeur limite inférieure (Iu) ;
(ee) le transistor (27) est reconnecté, si le courant de charge (I1) passe sous la valeur limite inférieure (Iu).

32. Procédé selon l'une des revendications 26 à 31,
**caractérisé**
**en ce que** le transistor (27) du régulateur de commutation (21) couplé à l'entrée (22) est connecté en continu, et/ou la porte de transfert (29) disposée parallèlement au régulateur de commutation (21) connectée, si le premier signal de mesure de tension (Vdiff2) présente un différentiel de tension (Vdiff2) inférieur à une valeur seuil inférieure.

33. Procédé selon l'une des revendications 26 à 32,
**caractérisé**
**en ce que** le transistor (27) du régulateur de commutation (21) couplé à l'entrée est connecté en continu, et/ou la porte de transfert (29) disposée parallèlement au régulateur de commutation (21) connectée, si un temps de charge de l'inductance (24) du régulateur de commutation (21) dépasse une valeur limite définie en mode de régulation de commutation.

34. Procédé selon l'une des revendications 26 à 33,
**caractérisé**
**en ce qu'**à partir de la tension différentielle (Vdiff) mesurée, il est détecté quand la tension différentielle (Vdiff) est suffisamment réduite, ou quand l'égalisation de charge entre la sortie (23) et l'entrée (22) a été suffisamment exécutée pour procéder à une fermeture continue du régulateur de commutation (21) et connecter la porte de transfert (29).

35. Procédé selon l'une des revendications 26 à 34,
**caractérisé**
**en ce que** le fonctionnement correct et/ou les erreurs en fonctionnement des parties de circuit du dispositif de commutation (20) sont surveillés, et en ce qu'il n'est pas procédé à une connexion du dispositif de commutation (20) en cas d'erreur détectée.

36. Procédé selon l'une des revendications 26 à 35,
**caractérisé**
**en ce que** l'état de commutation actuel du dispositif de commutation (20) est transmis au moyen d'un signal d'état à une unité de commande externe où il est affiché.
